# EUROPEAN PATENT APPLICATION

(11) **EP 4 672 135 A1**
(43) Date of publication of application: **31.12.2025**
(21) Application number: 25185824.7
(22) Date of filing: 27.06.2025
(51) Int. Cl.: G06T 5/50, G06T 11/00

(54) **METHODS AND SYSTEMS FOR IMAGE CORRECTION**

(30) Priority: 28.06.2024 CN 202410867344
(71) Applicant: Shanghai United Imaging Healthcare Co., Ltd., Shanghai 201807 (CN)
(72) Inventor: SUN, Haohua, Shanghai, 201807 (CN); ZHANG, Xi, Shanghai, 201807 (CN); TIAN, Jiao, Shanghai, 201807 (CN)
(74) Representative: Wang, Bo

(57) **Abstract**

Provided are a method and a system for image correction. The method includes: obtaining initial scanning data in a preset time period; generating first images, each of the first images corresponding to one of first phases in the preset time period and being generated based on a portion of the initial scanning data acquired in the one of the first phases, one of the first phases being a target phase; generating second images based on the first images or the initial scanning data, each of the second images corresponding to one of the first phases; determining a motion estimation corresponding to each of the first phases based on the second images; and generating a target image corresponding to the target phase based on motion estimations corresponding to the first phases and the first images.

## Description

### CROSS-REFERENCE TO RELATED APPLICATIONS

This application claims priority to Chinese Patent Application No. 202410867344.6, filed on June 28, 2024, the entire contents of which are hereby incorporated by reference.

### TECHNICAL FIELD

The present disclosure relates to the field of medical imaging, and in particular, to a method and a system for image correction.

### BACKGROUND

During a computed tomography (CT) scanning procedure, a scanned object (e.g., a patient) may not remain completely stationary (e.g., due to physiological motions such as respiration, intestinal movement, heartbeat, etc.), resulting in inconsistency in acquired raw scanning data. Therefore, a reconstructed image may include a motion artifact (e.g., a localized brightness variation, a blurred organ boundary, etc.). While a multi-source CT system employing multiple (e.g., two) radiation sources simultaneously can achieve improved physical temporal resolution compared to a single-source CT system at the same rotational speed, motion artifacts in the reconstructed image still cannot be eliminated.

Therefore, it is desirable to provide a method and a system for image correction that can decrease the motion artifacts in the reconstructed image caused by movement during CT scanning, thereby improving image quality.

### SUMMARY

One or more embodiments of the present disclosure provide a method for image correction. The method includes: obtaining initial scanning data in a preset time period; generating first images, each of the first images corresponding to one of first phases in the preset time period and being generated based on a portion of the initial scanning data acquired in the one of the first phases, one of the first phases being a target phase; generating second images based on the first images or the initial scanning data, each of the second images corresponding to one of the first phases, a second image and a first image corresponding to a same first phase corresponding to different scanning ranges; determining a motion estimation corresponding to each of the first phases by registering each of the second images with a first reference image; and generating a target image corresponding to the target phase based on motion estimations corresponding to the first phases and the first images.

In some embodiments, the different scanning ranges of the first image and the second image corresponding to the same first phase are denoted by scanning angles, and a scanning angle of the first image is less than a scanning angle of the second image.

In some embodiments, generating the first images includes: dividing the initial scanning data in the preset time period into a plurality of segments according to the first phases, each of the plurality of segments being acquired during one of the first phases; and reconstructing each of the first images corresponding to one of the first phases based on one of the plurality of segments corresponding to the one of the first phases.

In some embodiments, generating the second images includes: generating the second image corresponding to the target phase by fusing the first images corresponding to the first phases.

In some embodiments, generating the second images includes: for a specific first phase among the first phases except the target phase, determining a second image corresponding to the specific first phase according to operations including: obtaining a first image corresponding to the specific first phase and first images corresponding to second phases associated with the specific first phase, the second phases associated with the specific first phase including a plurality of consecutive phases centered on the specific first phase; generating a second image corresponding to the specific first phase by fusing the first images corresponding to the second phases and the first image corresponding to the specific first phase.

In some embodiments, the generating a target image corresponding to the target phase includes: determining a calibrated first image corresponding to each of the first phases by calibrating each of the first images corresponding to the each of the first phases using the motion estimation corresponding to the each of the first phases; and fusing the calibrated first images corresponding to the first phases to obtain the target image corresponding to the target phase.

In some embodiments, the determining a target image corresponding to the target phase includes: calibrating the first image or the second image corresponding to the target phase using the motion estimation corresponding to the target phase to obtain the target image corresponding to the target phase.

In some embodiments, the initial scanning data includes a plurality of scanning sub-datasets, each of the plurality of scanning sub-datasets is acquired by one of a plurality of imaging components of a medical device. Each of the first images corresponding to each of the first phases is generated according to operations including: generating a first sub-image based on a portion of each of the plurality of scanning sub-datasets acquired during the each of the first phases to obtain multiple first sub-images; and fusing the multiple first sub-images to obtain the first image corresponding to the each of the first phases.

In some embodiments, each of the first images includes multiple first sub-images each of which is reconstructed based on a portion of one of a plurality of scanning sub-datasets acquired by one of a plurality of imaging components during one of the first phases. The generating a target image corresponding to the target phase includes: determining a plurality of calibrated first sub-images corresponding to the each of the first phases by calibrating the multiple first sub-images corresponding to the first phase using the motion estimation corresponding to the first phase; and fusing the calibrated first sub-images corresponding to the first phases to generate the target image corresponding to the target phase.

In some embodiments, the determining a target image corresponding to the target phase includes: performing a plurality of iterations. Each of the plurality of iterations includes: obtaining a calibrated second image corresponding to each of the first phases based on the first images and the motion estimations corresponding to the first phases; in response to determining that a termination condition is not satisfied, determining an updated motion estimation corresponding to each of the first phases based on the calibrated second image; designating the updated motion estimation as the motion estimation used in a next iteration and proceeding to the next iteration; and in response to determining that the termination condition is satisfied, designating a calibrated second image corresponding to the target phase as the target image corresponding to the target phase.

In some embodiments, the obtaining a calibrated second image corresponding to each of the first phases based on the first images and the motion estimation includes: determining the calibrated second image corresponding to the target phase by: performing a motion calibration on each of the first images using the motion estimation corresponding to the each of the first phases to obtain a calibrated first image; and fusing the calibrated first images corresponding to the first phases to obtain the calibrated second image corresponding to the target phase.

In some embodiments, the method further comprises: in response to determining that the termination condition is not satisfied, designating the calibrated first images corresponding to the first phases as the first images used in the next iteration.

In some embodiments, the obtaining a calibrated second image corresponding to each of the first phases based on the first images and the motion estimations corresponding to the first phases includes: determining the calibrated second image corresponding to a specific first phase among the first phases except the target phase by: obtaining first images corresponding to second phases associated with the specific first phase and a first image corresponding to the specific first phase, the second phases associated with the specific first phase including a plurality of consecutive phases centered on the specific first phase; obtaining second images corresponding to the second phases and a second image corresponding to the specific first phase; generating a motion estimation corresponding to each of the second phases and the specific first phase by registering the second images corresponding to one of the second phases and the specific first phase to a second reference image; calibrating each of the first images corresponding to one of the second phases and the specific first phase using the motion estimation to obtain calibrated first images corresponding to the second phases associated with the specific first phase and the specific first phase; and generating the calibrated second image corresponding to the specific first phase by fusing the calibrated first images. The second phases associated with the specific first phase include one or more consecutive phases of the specific first phase among the first phases.

One or more embodiments of the present disclosure provides a system for image correction. The system includes an acquisition module, a first generation module, a second generation module, a registration module, and a third generation module. The acquisition module is configured to obtain initial scanning data in a preset time period. The first generation module is configured to generate first images, each of the first images corresponding to one of first phases in the preset time period and being generated based on a portion of the initial scanning data acquired in the one of the first phases, one of the first phases being a target phase. The second generation module is configured to generate second images based on the first images or the initial scanning data, each of the second images corresponding to one of the first phases, a second image and a first image corresponding to a same first phase corresponding to different scanning ranges. The registration module is configured to determine a motion estimation corresponding to each of the first phases by registering each of the second images with a first reference image. The third generation module is configured to generate a target image corresponding to the target phase based on motion estimations corresponding to the first phases and the first images.

One or more embodiments of the present disclosure provides a device comprising a processor. The processor is configured to implement a method for image correction.

One or more embodiments of the present disclosure provides a computer-readable storage medium. The storage medium stores computer instructions, and when a computer reads the computer instructions from the storage medium, the computer executes a method for image correction.

### BRIEF DESCRIPTION OF THE DRAWINGS

The present disclosure will be further illustrated by way of exemplary embodiments, which will be described in detail using the accompanying drawings. These embodiments are not limiting, and in these embodiments, the same numbering denotes the same structure, wherein:
FIG. 1 is a schematic diagram illustrating an application scenario of a system for image correction according to some embodiments of the present disclosure.
FIG. 2 is an exemplary block diagram illustrating a system for image correction according to some embodiments of the present disclosure.
FIG. 3 is an exemplary flowchart illustrating a process for image correction according to some embodiments of the present disclosure;
FIG. 4 is a schematic diagram illustrating a correspondence relationship among first phases, first images, and second images according to some embodiments of the present disclosure;
FIG. 5 is an exemplary flowchart illustrating a process for determining a target image through iterations according to some embodiments of the present disclosure;
FIG. 6 is a schematic flowchart illustrating an image calibration process of a single-source CT system according to some embodiments of the present disclosure;
FIG. 7 is a schematic flowchart illustrating an image calibration process of a dual-source CT system according to some embodiments of the present disclosure;
FIG. 8 is a schematic diagram illustrating an iterative image correction process according to some embodiments of the present disclosure; and
FIG. 9 is a structural schematic diagram of a computer device according to some embodiments of the present disclosure.

### DETAILED DESCRIPTION

To more clearly illustrate the technical solutions of the embodiments of the present disclosure, the accompanying drawings to be used in the description of the embodiments will be briefly described below. Obviously, the accompanying drawings in the following description are only some examples or embodiments of the present disclosure, and that the present disclosure may be applied to other similar scenarios in accordance with these drawings without creative labor for those of ordinary skill in the art. Unless obviously acquired from the context or the context illustrates otherwise, the same numeral in the drawings refers to the same structure or operation.

It should be understood that terms such as "system," "device," "equipment," "unit," and "module" as used herein is a way to distinguish between different components, elements, parts, sections, or assemblies at different levels. However, these words may be replaced by other expressions if they accomplish the same purpose.

As indicated in the present disclosure and in the claims, the singular forms "a," "an," and "the" may be intended to include the plural forms as well, unless the context clearly indicates otherwise. In general, the terms "comprise," "comprises," and/or "comprising," "include," "includes," and/or "including," when used in this disclosure, specify the presence of stated features, integers, steps, operations, elements, and/or components, but do not preclude the presence or addition of one or more other features, integers, steps, operations, elements, components, and/or groups thereof.

Flowcharts are used in the present disclosure to illustrate the operations performed by the system according to some embodiments of the present disclosure. It should be understood that the operations described herein are not necessarily executed in a specific order. Instead, they may be executed in reverse order or simultaneously. Additionally, one or more other operations may be added to these processes, or one or more operations may be removed.

During a computed tomography (CT) scanning procedure, a scanned object (e.g., a patient) may not remain completely stationary (e.g., due to physiological motions such as respiration, intestinal movement, heartbeat, etc.), resulting in inconsistency in acquired raw scanning data. Therefore, a reconstructed image may include a motion artifact (e.g., a localized brightness variation, a blurred organ boundary, etc.). While a multi-source CT system employing multiple (e.g., two) radiation sources simultaneously can achieve improved physical temporal resolution compared to a single-source CT system at the same rotational speed, motion artifacts in the reconstructed image still cannot be eliminated. Furthermore, for partial-angle scanning, under a restricted gantry rotation speed, raw data used for image reconstruction is acquired at different time points corresponding to varying cardiac motion states, which also leads to motion artifacts in a reconstructed image. To reduce the impact of motion on imaging quality, the currently common approaches are prospective scanning or retrospective scanning. For the prospective scanning, an electrocardiogram (ECG) signal of a heartbeat is typically utilized to control the timing of scan initiation, ensuring data acquisition occurs during a cardiac cycle with a relatively small motion amplitude. For the retrospective scanning, multiple scans are performed at the same phase across a plurality of cardiac cycles to obtain data approximating consistent motion states. However, the prospective scanning approach and the retrospective scanning approach mentioned above can still result in motion artifacts in reconstructed images due to data inconsistency.

Three conventional correction approaches are used to eliminate artifacts in reconstructed images:
1. Motion estimation and correction based on a multi-phase coronary centerline. This approach reconstructs a cardiac coronary artery image across multiple consecutive phases. The centerline of the coronary artery is then extracted, and a motion vector field of the coronary artery during a corresponding time period is estimated. Subsequently, motion artifact correction or compensation is performed in an image domain or a data domain. However, this approach has the following limitations: (i) Coronary centerline extraction is required for calibration based on the multi-phase coronary centerline, which may fail or yield an inaccurate result; (ii) The application scope of this calibration approach is relatively limited, being only applicable to artifact correction in cardiac coronary arteries and not extendable to other anatomical structures (e.g., valves).
2. Motion correction based on partial-angle reconstruction. In this approach, small-angle reconstruction is performed at every 180° interval. A plurality of reconstructed images are then registered to determine a motion vector field, followed by motion correction. The challenges of this approach include: (i) Partial-angle reconstruction calibration inherently involves partial-angle scanning, where insufficient data makes motion estimation fundamentally difficult; (ii) Consequently, the resulting image quality is compromised.
3. Deep learning-based motion correction. In this approach, two implementations are employed: (i) A dataset containing artifacts and an artifact-free dataset are generated, and image-to-image motion correction is performed using a deep learning technique; or (ii) A motion model is generated through a deep learning network, and a motion vector field is generated based on different motion time points. In other words, motion is estimated directly from projection data by establishing a parameterized motion model that minimizes a discrepancy between the projection data and a model prediction, thereby estimating a motion parameter. The drawbacks of this approach include: (i) The robustness of deep learning-based calibration is suboptimal; (ii) It may not be universally applicable to motion calibration across various scenarios.

In view of the above, the present disclosure proposes a method and a system for image correction. By determining a motion estimation (e.g., a motion vector field) through a second image (e.g., a full-angle reconstructed image) and calibrating a first image (e.g., a partial-angle reconstructed image) based on the motion estimation, a high-quality reconstructed image (e.g., artifact-free or with significantly reduced artifacts) can be generated.

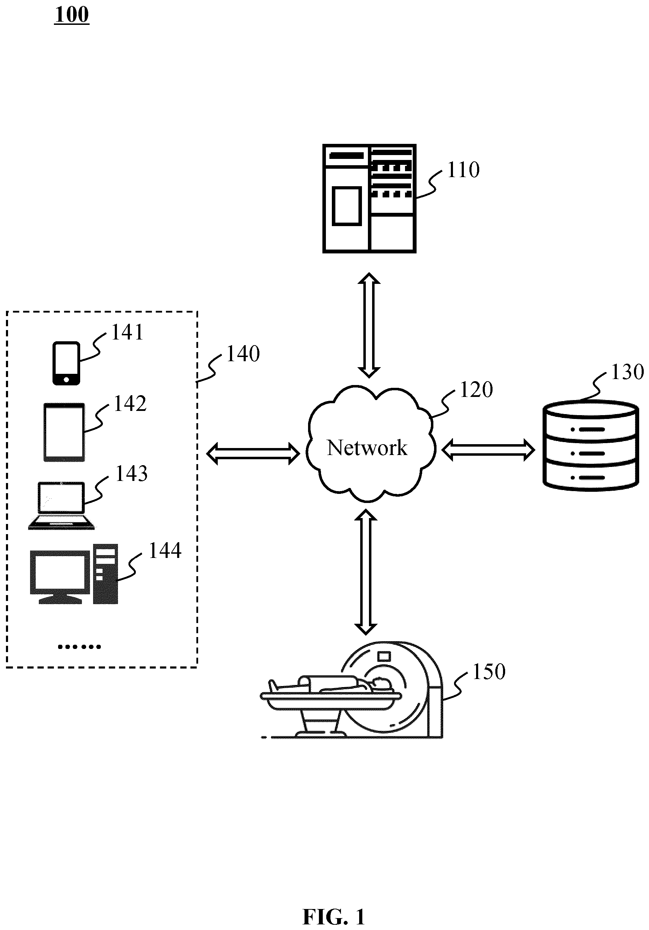

FIG. 1 is a schematic diagram illustrating an application scenario of a system for image correction according to some embodiments of the present disclosure. As shown in FIG. 1, an application scenario 100 of the system for image correction (hereinafter referred to as the application scenario 100) may include a processing device 110, a network 120, a storage device 130, a terminal device 140, and an imaging device 150.

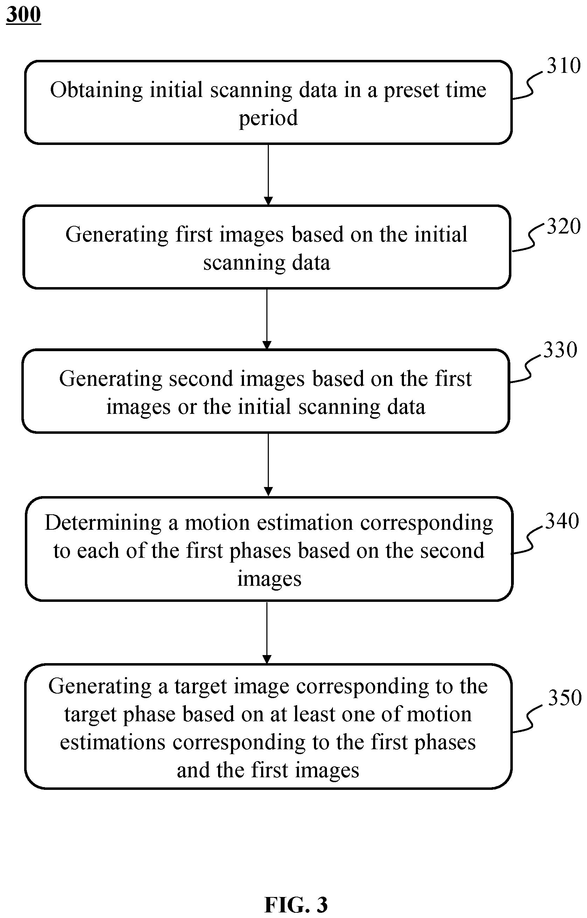

The processing device 110 is configured to process data and/or information obtained from the storage device 130, the terminal device 140, and/or the imaging device 150. For example, the processing device 110 may generate a plurality of first images and/or a plurality of second images based on initial scanning data acquired from the storage device 130 or the imaging device 150. As another example, the processing device 110 may register each of the plurality of second images with a first reference image to determine a motion estimation corresponding to each of the plurality of the fist images or each of the plurality of second images (i.e., corresponding to each of first phases). As a further example, the processing device 110 may generate a target image corresponding to a target phase among the first phases based on at least one of motion estimations corresponding to the first phases. More descriptions regarding the above examples may be found in FIG. 3 and related descriptions thereof. As yet another example, the processing device 110 may perform a plurality of iterations, and each of the plurality of iterations includes: obtaining a calibrated second image corresponding to each of the first phases based on the first images and the motion estimation. Then, the processing device 110 may determine whether a termination condition is satisfied. In response to determining that the termination condition is not satisfied, the processing device 110 may determine an updated motion estimation corresponding to each of the first phases based on the calibrated second image, designate the updated motion estimation as the motion estimation used in a next iteration and proceed to the next iteration. In response to determining that the termination condition is satisfied, the processing device 110 may designate the calibrated second image corresponding to the target phase as the target image corresponding to the target phase.

In some embodiments, the processing device 110 may include a processor. In some embodiments, the processing device 110 may be a single server or a server group.

The network 120 is configured to connect various components of the application scenario 100 and/or connect the system for image correction with an external resource. The network 120 enables communication between components and with external parts of the system, facilitating exchange of data and/or information. For example, the network 120 may transmit initial scanning data acquired by the imaging device 150 to the processing device 110. As another example, the network 120 may transmit an instruction (e.g., an instruction to start/stop scanning by the imaging device 150) input by a user through the terminal device 140 to the imaging device 150.

The network 120 may be a wireless network or a wired network, using standard communication technologies and/or protocols. For example, the network 120 may be the Internet, or any other network including but not limited to a Local Area Network (LAN), a Metropolitan Area Network (MAN), a Wide Area Network (WAN), a mobile network, a wired network, a wireless network, a private network, a virtual private network, or any combination thereof.

The storage device 130 is configured to store data and/or instructions. For example, the storage device 130 may store the initial scanning data acquired by the imaging device 150. As another example, the storage device 130 may store the target image determined by the processing device 110, etc. The storage device 130 may be implemented in a single central server, a plurality of servers connected through communication links, a plurality of personal devices, or the like.

The terminal device 140 refers to one or more terminal devices or software used by the user. The user refers to an operator (e.g., a doctor, laboratory personnel, etc.) of the imaging device 150. In some embodiments, the terminal device 140 may have various general-purpose or special-purpose computing device environments or configurations, such as a personal computer, a server computer, a handheld or portable device, a tablet device, a multiprocessor device, a distributed computing environment including any of the above devices or equipment, etc. The terminal device 140 may have different names, such as user equipment (UE), access device, terminal unit, terminal station, mobile station, mobile platform, remote station, remote terminal, mobile device, wireless communication device, terminal agent or terminal apparatus, etc. The terminal device 140 may run an operating system, which may include but is not limited to Android, iOS, Linux, Unix, Windows, etc. The terminal device 140 may include a User Interface (UI) layer and may display an image (e.g., the target image) through the user interface layer.

The imaging device 150 is configured to perform imaging of a scan subject. The imaging device 150 may scan the scan subject within a detection region or a scan region to obtain initial scanning data (or raw scanning data) of the scan subject. For example, the imaging device 150 may use high-energy radiation (e.g., X-rays) to scan the scan subject and collect the initial scanning data (e.g., a three-dimensional image) related to the scan subject. The scan subject may include a biological object or a non-biological object. Merely as an example, the scan subject may include a patient, a test subject, an artificial object (e.g., a phantom), etc. As another example, the scan subject may be a body part to be examined of the patient, such as an organ and/or a tissue of the patient (e.g., the patient's head, ears and nose, oral cavity, neck, chest, abdomen, liver, gallbladder, pancreas, spleen, kidneys, spine, heart, tumor tissues, etc.).

In some embodiments, the imaging device 150 may include a single-modality scanner and/or a multi-modality scanner. The single-modality scanner may be a Computed Tomography (CT) device, a Digital Radiography (DR) device, a Magnetic Resonance Imaging (MRI) device, a Positron Emission Tomography-Computed Tomography (PET-CT) device, or a Positron Emission Tomography-Magnetic Resonance Imaging (PET-MRI) device. The multi-modality scanner may include any combination of the above devices. Hereinafter, unless otherwise specified, embodiments of the present disclosure will be described using a CT device as an example.

For example, the CT device may include a computed tomography scanner and a scanning table coupled to the computed tomography scanner. The computed tomography scanner forms a scanning chamber, and the scanning table is used to support the scan subject. The scanning table is movable and may move the scan subject inside the scanning chamber.

The computed tomography scanner includes an X-ray source module and a detector module. The X-ray source module may include an X-ray tube and a related control circuit. The X-ray tube may generate an X-ray during a CT scanning procedure. The X-ray source may be of various types, such as a rotating-anode X-ray tube, a stationary-anode X-ray tube, or the like. The X-ray source module may emit an X-ray signal toward an object of interest (e.g., the scan subject). The detector module may generate absorption information of X-rays in X, Y or Z directions. In some embodiments, a function, a size, a type, a geometry, a position, a quantity, and/or an amplitude of the X-ray source module and/or the detector module may be determined or modified according to one or more specific conditions. In some embodiments of the present disclosure, the detector module may include a scintillation detector, a semiconductor detector, etc. In some embodiments, the X-ray source module and the detector module may be designed to surround the scan subject to form a tunnel-type configuration or an open-type configuration.

In some embodiments, the imaging device 150 may include a multi-source CT device. The multi-source CT device may include a plurality of X-ray source modules and one or more detector modules, and may simultaneously acquire scanning data of the scan subject through the plurality of X-ray source modules and the one or more detector modules. For example, taking a Dual Source CT device as an example, the Dual Source CT device may include an imaging component A and an imaging component B, where the imaging component A may include an X-ray tube A and a detector A, and the imaging component B may include an X-ray tube B and a detector B.

In some embodiments, radiation generating devices (e.g., the X-ray tube A and the X-ray tube B) of the plurality of X-ray source modules and detectors (e.g., the detector A and the detector B) may be installed at a certain angle on a same plane for synchronous scanning. In some embodiments, a working mode of the multi-source CT device may include a single-source mode and a multi-source mode. Taking a Dual Source CT device as an example, in the single-source mode, one imaging component (e.g., the imaging component A) of the Dual Source CT device operates while the other imaging component (e.g., the imaging component B) remains inactive. In the multi-source mode, the two imaging components of the Dual Source CT device operate simultaneously. For example, each imaging component independently emits and receives radiation and completes image processing independently. However, during image reconstruction, the scanning data obtained from these two data acquisition systems may be reconstructed independently to produce two sets of images or be reconstructed into one set of fused images.

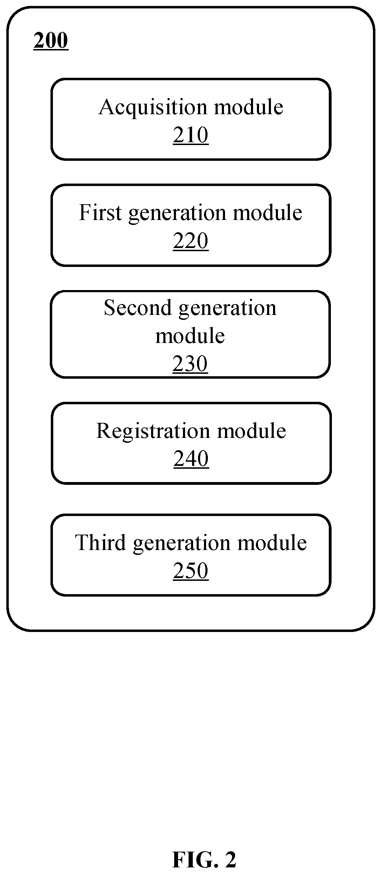

FIG. 2 is an exemplary block diagram illustrating a system for image correction according to some embodiments of the present disclosure. In some embodiments, as shown in FIG. 2, a system 200 for image correction may include an acquisition module 210, a first generation module 220, a second generation module 230, a registration module 240, and a third generation module 250.

The acquisition module 210 is configured to obtain initial scanning data in a preset time period.

The first generation module 220 is configured to generate a first image for each of first time phases in the preset time period based on the initial scanning data.

In some embodiments, the first image corresponding to one of the first phases is generated based on a portion of the initial scanning data acquired in the one of the first phases, and the first generation module 220 is further configured to: divide the initial scanning data in the preset time period into a plurality of segments according to the first phases, each of the plurality of segments being acquired during one of the first phases; and reconstruct each of the first images corresponding to one of the first phases based on one of the plurality of segments corresponding to the one of the first phases.

The second generation module 230 is configured to generate a second image for each of first time phases in the preset time period based on the initial scanning data or first images corresponding to the first time phases.

In some embodiments, the first generation module 220 is further configured to generate the second image corresponding to the target phase by fusing the first images corresponding to the first phases.

In some embodiments, the first generation module 220 is further configured to, for a specific first phase among the first phases except the target phase, determine a second image corresponding to the specific first phase. To determine a second image corresponding to the specific first phase, the first generation module 220 is further configured to: obtain a first image corresponding to the specific first phase and first images corresponding to second phases associated with the specific first phase, the second phases associated with the specific first phase including a plurality of consecutive phases centered on the specific first phase; and generate a second image corresponding to the specific first phase by fusing the first images corresponding to the second phases and the first image corresponding to the specific first phase.

The registration module 240 is configured to determine a motion estimation corresponding to each of the first phases based on second images corresponding to the first time phases.

The third generation module 250 is configured to generate a target image corresponding to the target phase based on at least one of motion estimations corresponding to the first phases.

In some embodiments, the third generation module 250 is further configured to determine a calibrated first image corresponding to each of the first phases by calibrating each of the first images corresponding to the each of the first phases using the motion estimation corresponding to the each of the first phases; and fuse the calibrated first images corresponding to the first phases to obtain the target image corresponding to the target phase.

In some embodiments, the third generation module 250 is further configured to calibrate the first image or the second image corresponding to the target phase using the motion estimation corresponding to the target phase to obtain the target image corresponding to the target phase.

In some embodiments, the third generation module 250 is further configured to perform a plurality of iterations, wherein each of the plurality of iterations includes: obtaining a calibrated second image corresponding to each of the first phases based on the first images and the motion estimations corresponding to the first phases. In response to determining that a termination condition is not satisfied, the third generation module 250 determines an updated motion estimation corresponding to each of the first phases based on the calibrated second image, and designates the updated motion estimation as the motion estimation used in a next iteration and proceeding to the next iteration. In response to determining that the termination condition is satisfied, the third generation module 250 designates a calibrated second image corresponding to the target phase as the target image corresponding to the target phase.

In some embodiments, the third generation module 250 is further configured to determine the calibrated second image corresponding to the target phase by: performing a motion calibration on each of the first images using the motion estimation corresponding to the each of the first phases to obtain a calibrated first image, and fusing the calibrated first images corresponding to the first phases to obtain the calibrated second image corresponding to the target phase.

In some embodiments, the third generation module 250 is further configured to: in response to determining that the termination condition is not satisfied, designates the calibrated first images corresponding to the first phases as the first images used in the next iteration.

In some embodiments, the third generation module 250 is further configured to determine the calibrated second image corresponding to a specific first phase among the first phases except the target phase by obtaining first images corresponding to second phases associated with the specific first phase and a first image corresponding to the specific first phase, the second phases associated with the specific first phase including a plurality of consecutive phases centered on the specific first phase, and obtaining second images corresponding to the second phases and a second image corresponding to the specific first phase. The third generation module 250 is further configured to: generate a motion estimation corresponding to each of the second phases and the specific first phase by registering the second images corresponding to one of the second phases and the specific first phase to a second reference image; calibrate each of the first images corresponding to one of the second phases and the specific first phase using the motion estimation to obtain calibrated first images corresponding to the second phases associated with the specific first phase and the specific first phase; and generate the calibrated second image corresponding to the specific first phase by fusing the calibrated first images. The second phases associated with the specific first phase include one or more consecutive phases of the specific first phase among the first phases.

It should be noted that the above descriptions of the system 200 and its modules is for illustrative purposes only and should not be construed as limiting the scope of this disclosure to the described embodiments. It may be understood that those skilled in the art, upon understanding the principles of the system, may make various combinations of the modules or form subsystems connected with other modules without departing from these principles. In some embodiments, the acquisition module 210, the first generation module 220, the second generation module 230, the registration module 240, and the third generation module 250 disclosed in FIG. 2 may be different modules in one system, or one module may implement the functions of two or more of the above modules. For example, all modules may share one storage module, or each module may have its own storage module. Such variations all fall within the protection scope of this disclosure.

FIG. 3 is an exemplary flowchart illustrating a process for image correction according to some embodiments of the present disclosure. As shown in FIG. 3, process 300 includes the following operations. In some embodiments, process 300 may be executed by the processing device 110 or the system 200.

In 310, initial scanning data in a preset time period may be obtained. In some embodiments, operation 310 may be performed by the processing device 110 or the acquisition module 210.

The initial scanning data refers to data collected by a detector of an imaging device (e.g., the imaging device 150) during the preset time period of a scanning procedure. For example, the initial scanning data may be CT data (e.g., X-ray absorption data, i.e., projection data from a detector module of the CT device) acquired by the CT device during the preset time period of the scanning procedure. The scanning procedure may be partial-angle scanning or full-angle scanning. The partial-angle scanning refers to that a rotating angle of an imaging component (including an X-ray source and a detector) of the imaging device is less than 180° (e.g., 90°, 120°, 150°, etc.) during the scanning procedure. The full-angle scanning refers to that the rotating angle of the imaging component of the imaging device is greater than 180° (e.g., 180°, 240°, 360°, 540° , etc., typically 360°) during the scanning procedure.

A duration of the preset time period may be set by the system for image correction (e.g., the processing device 110 or the acquisition module 210) or by the user. For example, the duration of the preset time period may be preset to 0.3s, 0.5s, 1s, 2s, etc. As a further example, the system may automatically determine the duration of the preset time period based on scanning information (e.g., a scan range) and/or scan subject information (e.g., a type of a subject, a volume of the subject, etc.).

In some embodiments, the preset time period may be a portion of a complete scanning time period (i.e., total scanning duration) during which the imaging device scans the same subject. For example, if the complete scanning time period for scanning the subject is 2s, the preset time period may be the first 1s of the complete scanning time period. Therefore, the initial scanning data may be a portion of all scanning data obtained from scanning the same subject. Preferably, the preset time period may be a time interval within the complete scanning time period during which the motion amplitude of the subject is relatively small. The motion amplitude of the scan subject during a time interval being relatively small includes that an average motion amplitude of the subject during the time interval (i.e., the preset time period) is smaller than a threshold or the motion amplitude at each moment in the time interval is smaller than a threshold. The threshold may be a default setting by the system or set by a user according to requirements. For example, if the subject is the heart, the preset time period may be the duration of the mid-diastolic phase of the cardiac cycle. The processing device 110 or the acquisition module 210 may determine the time interval during which the motion amplitude (e.g., the average motion amplitude, the motion amplitude at each moment in the time interval) of the subject is relatively small through various approaches. For example, the processing device 110 or the acquisition module 210 may obtain (e.g., via the network 120) a physiological signal of the subject collected by a physiological monitoring device, and identify the time interval during which the motion amplitude of the subject is relatively small based on the physiological signal. By way of example, the processing device 110 or the acquisition module 210 may acquire an electrocardiographic (ECG) signal of the heart collected by an electrocardiographic device and determine the time interval during which the motion amplitude of the subject is relatively small based on the ECG signal. As another example, the processing device 110 or the acquisition module 210 may acquire an image of the scan subject collected by an image acquisition device (e.g., a 3D laser camera, a radar camera, or the like) and determine the time interval during which the motion amplitude of the scan subject is relatively small based on the image. By way of example, the processing device 110 or the acquisition module 210 may acquire an image (e.g., a B-mode ultrasound image) of the heart collected by an ultrasound imaging device (e.g., a B-mode ultrasound device) and determine time interval during which the motion amplitude of the scan subject is relatively small based on the image (e.g., by performing image recognition on the image).

In some embodiments, the preset time period may be the complete scanning time period for scanning a given scan subject. For example, if the imaging device performs partial-angle scanning, the scan duration is insufficient for the imaging component (including an X-ray source and a detector) to complete a full rotation, therefore the complete scanning time period of this scanning process may be designated as the preset time period.

The preset time period may correspond to a preset scanning range of the imaging device. The preset scanning range refers to an angular range (e.g., a rotation range) covered by the imaging component (e.g., an X-ray source and a detector) during the preset time period. A scanning range in a time period includes an initial angular position and an end angular position. The initial angular position may be an angular position at the starting time of the time period and the end angular position may be an angular position at the ending time of the time period. A difference between the initial angular position and the end angular position may be a rotation angle from the starting time of the time period to the ending time of the time period.

For example, if the imaging component starts at an initial angular position of 120° and rotates 360° during the preset time period, the preset scanning range is [120°, 480°]. As another example, if the imaging component starts at an initial angular position of 480° and rotates 240°, the preset scanning range is [480°, 720°].

It should be noted that the aforementioned angle values refer to the rotation angle of the imaging component of the imaging device relative to a starting position (when the imaging component starts to rotate in a scan of the subject) of the imaging component. For example, 120° indicates the imaging component has rotated 120° from the starting position, and 480° represents that the imaging component has rotated 480° relative to the starting position. Understandably, since a full rotation of the imaging component is 360°, 120° indicates that the imaging component has not completed a full rotation, while 480° indicates that the imaging component has completed one full rotation plus an additional 120° rotation.

In some embodiments, the imaging device 150 is a single-source CT device, comprising a single imaging component.

In some embodiments, the imaging device 150 is a multi-source CT device, which includes a plurality of imaging components. Each imaging component consists of one X-ray source (also referred to as a radiation source) and one detector. In other words, a multi-source CT device includes a plurality of X-ray sources and a plurality of detectors.

Therefore, the initial scanning data includes a plurality of scanning sub-datasets, each of which is respectively acquired by one of a plurality of detectors, wherein each of the plurality of detectors respectively receives a signal (e.g., an X-ray) from one of a plurality of radiation sources to generate a corresponding scanning sub-dataset. Taking a dual-source CT device as an example, the dual-source CT device may comprise two imaging components: one imaging component includes a first radiation source and a first detector; the other imaging component includes a second radiation source and a second detector. The first detector receives a signal from a first radiation source, and the second detector receives a signal from a second radiation source. The initial scanning data includes two scan sub-datasets (a first scan sub-dataset and a second scan sub-dataset). The first scanning sub-dataset is acquired by the first detector during a preset time period, and the second scanning sub-dataset is acquired by the second detector during the preset time period.

In 320, first images may be generated based on the initial scanning data. In some embodiments, operation 320 may be executed by the processing device 110 or the first generation module 220.

Each of the first images is an image generated based on a portion of the initial scanning data. For example, the initial scanning data may be acquired based on a full-angle scanning, and the first image may be a partial-angle image reconstructed from a subset of the initial scanning data. The subset of the initial scanning data may be acquired by a partial-angle scanning relative to the full-angle scanning. The partial-angle image refers to an image reconstructed from scanning data obtained through partial-angle scanning. Manners for image reconstruction may include a back projection technique, an iterative reconstruction algorithm, and an analytical technique. The analytical technique may include filtered back projection, Fourier transform, or the like).

Each of the first images corresponds to a first phase within the preset time period and is generated (e.g., reconstructed) based on a portion of the initial scanning data. The portion of the initial scanning data also be referred to as first scanning data corresponding to the first phase acquired during the first phase.

The first phase refers to a partial time interval within the preset time period. The preset time period includes a plurality of first phases, a time span of each first phase constitutes a portion of the preset time period, and different first phases correspond to different portions of the preset time period.

A count of the first phases may be predetermined. For example, the count of the first phases may be 3, 5, 7, 9, etc. Preferably, the count of the first phases is 5 or 7.

Durations (or lengths) of the first phases may be the same or different. Taking a preset time period of 1 second with 5 first phases as an example. If the durations of the 5 phases are the same, the time intervals corresponding the 5 first phases may be [0, 0.2s], [0.2s, 0.4s], [0.4s, 0.6s], [0.6s, 0.8s], and [0.8s, 1s]. If the durations of the first phases are different, the time intervals corresponding the 5 first phases may be [0, 0.1s], [0.1s, 0.2s], [0.2s, 0.4s], [0.4s, 0.7s], and [0.7s, 1s] respectively.

In some embodiments, time intervals corresponding to adjacent first phases may have an overlapping portion. Taking the preset time period of 1 second with 5 first phases as an example, the time intervals corresponding the 5 first phases may be [0, 0.4s], [0.15s, 0.55s], [0.3s, 0.7s], [0.45s, 0.85s], and [0.6s, 1s] respectively. It should be understood that when time intervals corresponding to adjacent first phases overlap, there is an intersection in scanning data corresponding to the adjacent first phases. The scanning data belonging to the intersection constitutes the scanning data corresponding to the overlapping portion (overlapping time period) of the adjacent first phases.

The processing device 110 or the first generation module 220 may determine the first phases through various approaches.

In some embodiments, the processing device 110 or the first generation module 220 may select a portion of the preset time period as a target time interval and determine the first phases based on the target time interval. A position and a proportion of the target time interval within the preset time period may be predetermined. The count of first phases may also be predetermined. For example, if the preset time period is 1 second, the target time interval is centered within the preset time period, and a duration of the target time interval is 50% of the preset time period, then a time range corresponding to the target time interval is [0.25 s, 0.75 s]. By way of example, if the count of first phases is 5, the processing device 110 or the first generation module 220 may divide the target time interval into 5 first phases. The time ranges corresponding to these 5 first phases may be [0.0 s, 0.2 s], [0.2 s, 0.4 s], [0.4 s, 0.6 s], [0.6 s, 0.8 s], and [0.8 s, 1s]. It may be understood that in this case, the time intervals corresponding to the plurality of first phases only cover a portion (i.e., the portion corresponding to the target time interval) of the preset time period.

In some embodiments, the processing device 110 or the first generation module 220 may directly determine the first phases based on the preset time period. For example, if the preset time period is 1 second and the count of first phases is 5, the processing device 110 or the first generation module 220 may divide the preset time period into 5 first phases. The time ranges corresponding to these 5 first phases may be [0 s, 0. 3s], [0.2 s, 0.5 s], [0.4 s, 0.7 s], [0.6 s, 0.9s], and [0.8 s, 1 s], respectively. It may be understood that in this case, the time intervals corresponding to the plurality of first phases can fully cover the preset time period.

In some embodiments, one of the first phases is designated as a target phase.

After determining the first phases as described above, the processing device 110 or the first generation module 220 may designate one of the first phases as the target phase. For example, the processing device 110 or the first generation module 220 may designate a first phase located in the middle among the first phases as the target phase.

In some embodiments, the processing device 110 or the first generation module 220 may first determine the target phase, and then determine other first phases based on the target phase.

For example, the processing device 110 or the first generation module 220 may select a portion of the preset time period as the target phase, and determine the first phases based on the target phase.

The processing device 110 or the first generation module 220 may select, from within the preset time period, the time interval in which the motion amplitude of a subject is relatively small (e.g., the motion amplitude of the subject is smaller than a threshold, e.g., mid-diastole of the heart) as the target phase. In some embodiments, the processing device 110 or the first generation module 220 may determine the target phase by other means, which are not limited herein.

In some embodiments, the processing device 110 or the first generation module 220 may take the target phase as a center, select n phases adjacent to and preceding the target phase, and n phases adjacent to and following the target phase, as the first phases, thereby obtaining a total of (2n + 1) first phases, where n is a positive integer. For example, if the length of the preset time period is 1 second, the time range of the target phase is [0.45 s, 0.65 s], and the value of n is 2, then the n phases preceding and adjacent to the target phase may be [0.25 s, 0.45 s] and [0.35 s, 0.55 s], and the n phases following and adjacent to the target phase may be [0.55 s, 0.75 s] and [0.65 s, 0.85 s]. Thus, a total of 5 first phases are obtained: [0.25 s, 0.45 s], [0.35 s, 0.55 s], [0.45 s, 0.65 s], [0.55 s, 0.75 s], and [0.65 s, 0.85 s].

The value of n may be determined in various ways. In some embodiments, the value of n may be preset by the system. In some embodiments, the value of n may be positively correlated with the duration of the preset time period. In some embodiments, the value of n may be positively correlated with an image accuracy (e.g., resolution) of a first image or a finally reconstructed image (e.g., a target image). In other words, the higher the required image accuracy is, the greater the value of n is.

In some embodiments, n is a positive integer in the range of [1, 4]. Preferably, n is 2 or 3.

In some embodiments, when selecting the first phases centered on the target phase, the processing device 110 or the first generation module 220 may select an unequal count of phases before and after the target phase. For example, n₁ phases adjacent to and preceding the target phase and n₂ phases adjacent to and following the target phase may be selected as the first phases, thereby obtaining a total of (n₁ + n₂ + 1) first phases, where n₁ and n₂ are both positive integers and n₁ ≠ n₂.

As mentioned above, the preset time period may correspond to the preset scanning range of the imaging device. Therefore, each first phase may be characterized by the scanning range of the imaging component of the imaging device during the each first phase. For example, assuming the preset time period is 1 second and the count of first phases is five, the time intervals corresponding to the 5 first phases may be [0, 0.2s], [0.2s, 0.4s], [0.4s, 0.6s], [0.6s, 0.8s], and [0.8s, 1s], respectively. If the preset scanning range is [0°, 360°], then the scanning ranges corresponding to the 5 first phases may be [0°, 72°], [72°, 144°], [144°, 216°], [216°, 288°], and [288°, 360°], respectively. As another example, if the time intervals corresponding to adjacent first phases overlap, the preset time period is 1.2 seconds and the count of first phases is five, the time intervals corresponding to the 5 first phases may be [0, 0.4s], [0.2s, 0.6s], [0.4s, 0.8s], [0.6s, 1s], and [0.8s, 1.2s], respectively. If the preset scanning range is [0°, 360°], then the scanning ranges corresponding to the 5 first phases may be [0°, 120°], [60°, 180°], [120°, 240°], [180°, 300°], and [240°, 360°], respectively.

Hereinafter, the scanning range corresponding to a first phase is referred to as a first scanning range or a first angular range. Referring to the foregoing descriptions, since each of the first images is generated based on a portion of the initial scanning data acquired during the first phase (i.e., the first scanning data of that first phase) corresponding to the first image, the first scanning range corresponding to the first phase also serves as the first scanning range corresponding to the first image associated with that first phase.

In some embodiments of the present disclosure, selecting a phase during which the motion of the scan subject is relatively small as the target phase can significantly reduce the impact of motion artifacts on image quality and improve the accuracy of subsequent image registration and reconstruction. At the same time, the flexible time-phase selection strategy (e.g., the durations of the first phases may be equal or unequal, and the count of first phases before and after the target phase may be the same or different) optimizes the image reconstruction performance.

In some embodiments, the processing device 110 or the first generation module 220 may divide the initial scanning data within the preset time period into a plurality of segments based on the first phases. Each of the plurality of segments (also referred to as data segments) is acquired during one of the first phases. For example, assuming the length of preset time period is 1 second and includes 5 first phases corresponding to the time intervals [0, 0.2s], [0.2s, 0.4s], [0.4s, 0.6s], [0.6s, 0.8s], and [0.8s, 1s], the initial scanning data may be divided into five data segments based on the 5 first phases. Each of the data segments may be the first scanning data collected in the first phase. For example, a first data segment refers to the scanning data acquired within the time interval [0, 0.2s] corresponding to the first data segment. As another example, a fourth data segment refers to the scanning data acquired within the time interval [0.6s, 0.8s] corresponding to the fourth data segment.

The processing device 110 or the first generation module 220 may reconstruct each of the first images corresponding to one of the first phases based on one of the plurality of data segments corresponding to the one of the first phases. For example, still assuming the length of the preset time period is 1 second and includes 5 first phases corresponding to the time intervals [0, 0.2s], [0.2s, 0.4s], [0.4s, 0.6s], [0.6s, 0.8s], and [0.8s, 1s], the processing device 110 or the first generation module 220 may reconstruct the first image corresponding to a first phase T1 (corresponding to the [0, 0.2s] time interval) based on the first data segment. Similarly, the processing device 110 or the first generation module 220 may reconstruct the first image corresponding to a first phase T4 (corresponding to the [0.6s, 0.8s] time interval) based on the fourth data segment.

In some embodiments, the imaging device 150 comprises a multi-source CT device, which includes a plurality of imaging components. Each imaging component includes a radiation source and a detector. Within the preset time period, the plurality of imaging components of the multi-source CT device may independently acquire scanning data. The scanning data acquired by each imaging component during the preset time period is referred to as the scanning sub-dataset corresponding to the each imaging component. In other words, the initial scanning data may include the scanning sub-datasets acquired by the plurality of imaging components.

In some embodiments, the first image corresponding to each of the first phases may be determined based on a portion of each of the scanning sub-datasets acquired by the plurality of imaging components during the first phase. For example, the processing device 110 or the first generation module 220 may divide each of the scanning sub-datasets into multiple data segments as described above to obtain the portion of each of the scanning sub-datasets acquired by the plurality of imaging components during each first phase. For a first phase, the processing device 110 or the first generation module 220 may fuse (e.g., data merge) the data segments from the scanning sub-datasets acquired within the same first phase by the plurality of imaging components to obtain a fused data segment corresponding to the first phase. The first image corresponding to the first phase is then generated (e.g., reconstructed) based on the fused data segment corresponding to the first phase.

In some embodiments, for a first phase, a plurality of sub-images corresponding to the first phase may be generated based on the data segments obtained from the scanning sub-datasets acquired within the same first phase by the plurality of imaging components, and the first image corresponding to the first phase is determined based on the plurality of sub-images corresponding to the first phase. For example, the plurality of sub-images corresponding to the first phase may be fused to generate the first image corresponding to the first phase.

Still taking the dual-source CT device as an example, the initial scanning data includes two scanning sub-data sets (a first scanning sub-dataset and a second scanning sub-dataset). In this case, the first image corresponding to each of the first phases includes a first sub-image and a second sub-image corresponding to the first phase, and the first image is determined based on the first sub-image and the second sub-image corresponding to the first phase. The first sub-image is determined based on the portion of the first scanning sub-dataset acquired by the first detector within the first phase, and the second sub-image is determined based on the portion of the second scanning sub-dataset acquired by the second detector within the first phase.

In some embodiments, for a multi-source CT device, the multiple sub-images (e.g., the first sub-image and the second sub-image as described above) corresponding to each of the first phases may be not needed to be combined, and the first image may include the multiple sub-images corresponding to each of the first phases. Then in operation 350, the target image may be generated by calibrating the multiple sub-images corresponding to each of the first phases based on the motion estimation corresponding to the each of the first phases to obtain calibrated sub-images and fusing the calibrated sub-images corresponding to all the first phases to obtain the target image.

In 330, second images may be generated based on the first images or the initial scanning data. In some embodiments, operation 330 may be performed by the processing device 110 or the second generation module 230.

Each of the second images corresponds to one of the first phases. The second image corresponding to a first phase is different from the first image. For example, the first image corresponding to a first phase may be a partial-angle reconstructed image, and the second image corresponding to the first phase may be a full-angle reconstructed image.

The first image and the second image corresponding to a same first phase correspond to different scanning ranges. The scanning range of the first image belongs to the scanning range of the second image corresponding to the same first phase. The scanning range of a second image corresponding to a specific first phase may be a union set or a sum of phases associated with the specific first phase. The phases associated with the specific first phase may also be referred to as association phases. The association phases of the specific first phase refer to phases consecutive to the specific first phase and the count of the association phases of the specific first phase may be the same as the count of the first phases. For example, the association phases of the target phase may be first phases except the target phase. The scanning range of the second image corresponding to the target phase may be a sum of the scanning ranges of all the first phases.

For example, the scanning range corresponding to the second image for the target phase is the preset scanning range. Hereinafter, the scanning range corresponding to the second image of a first phase is referred to as a second scanning range, and the scanning data within the second scanning range is referred to as second scanning data.

In some embodiments, the scanning ranges of the first image and the second image corresponding to the same first phase are denoted by scanning angular ranges, and the length of a scanning angular range of the first image is less than the length of a scanning angular range of the second image corresponding to the same first phase as the first image. The scanning angular range of the first image is located within the scanning angular range of the second image corresponding to the same first phase as the first image. The length of a scanning angular range may also referred to as a scanning angle or a rotation angle.

For example, assuming the preset scanning range is [0, 360°], and scanning ranges corresponding to first phases T₁, T₂, T₃, T₄, and T₅ are [0, 120°], [60°, 180°], [120°, 240°], [180°, 300°], and [240°, 360°], respectively, wherein T₃ is the target phase. Taking the target phase T₃ as an example, the scanning range of the first image corresponding to T₃ is [120°, 240°], and the scanning range of the second image corresponding to T₃ is [0, 360°]. The scanning range of the first image is located within or belongs to the scanning range of the second image. The scanning angle of the first image is smaller than the scanning angle of the second image.

In some embodiments of the present disclosure, the initial scanning data is divided into a plurality of first phases according to requirements, and the first image corresponding to each of the first phases is reconstructed independently. Since the scanning duration corresponding to each first phase is relatively short, artifacts in the first images can be reduced and reconstruction speed can be increased, thereby improving the accuracy and data integrity of image reconstruction.

In some embodiments, the second image of a first phase may be generated based on a first image of the first phase and first images of a plurality of consecutive phases centered on the first phase (also referred to as the association phases of the first phase). A count of the association phases is equal to or less than the count of first phases except the target phase. The association phases include phases preceding and following the first phase. For example, the second image of the first phase may be generated by fusing the first image of the first phase and the first images of the association phases of the first phase.

In some embodiments, the second image of the first phase may be generated based on scanning data acquired during the first phase and the association phases of the first phase.

In some embodiments, the processing device 110 or the second generation module 230 generates the second image corresponding to the target phase based on the second scanning data corresponding to the target phase. For example, the processing device 110 or the second generation module 230 may perform image reconstruction based on the second scanning data corresponding to the target phase to generate the second image corresponding to the target phase. Referring to the foregoing descriptions, it may be understood that the second scanning data corresponding to the target phase is a union of the scanning data corresponding to all first phases.

In some embodiments, the processing device 110 or the second generation module 230 generates the second image corresponding to the target phase by fusing the first images corresponding to the first phases. First phases among all the first phases except the target phase are association phases of the target phase.

By way of example, the above-mentioned fusion manner may include: for each of second pixels in the second image corresponding to the target phase, the pixel value of the second pixel is equal to a sum of pixel values of first pixels at a same image position in the first images corresponding to the respective first phases. A first pixel refers to a pixel in a first image, and a second pixel refers to a pixel in a second image. The same image position refers to a position of a first pixel in a first image being the same as a position of a second pixel in a second image. For example, a coordinate position of a first pixel in a first image is the same as a coordinate position of a second pixel in a second image.

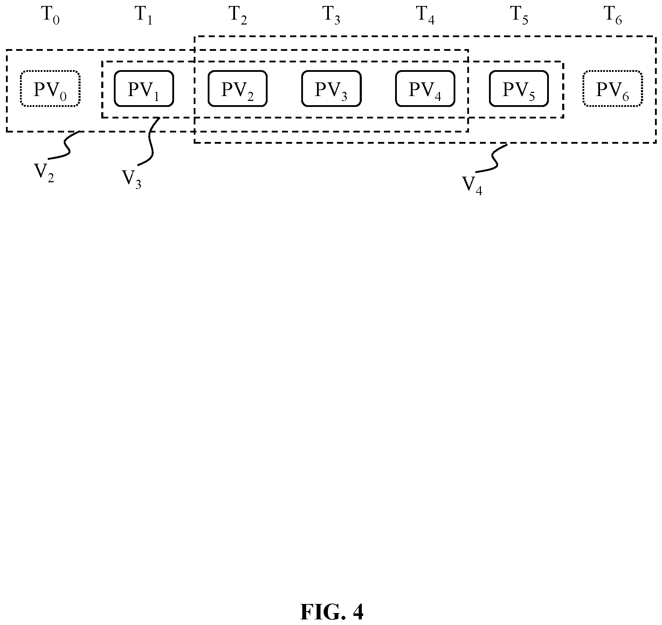

FIG. 4 is a schematic diagram illustrating a correspondence relationship among first phases, first images, and second images according to some embodiments of the present disclosure. As shown in FIG. 4, T₁, T₂, T₃, T₄, and T₅ are first phases, where T₃ is the target phase, and PV₁, PV₂, PV₃, PV₄, and PV₅ are first images corresponding to the first phases T₁, T₂, T₃, T₄, and T₅, respectively. By way of example, a second image V3 corresponding to the target phase may be generated by fusing the first images PV₁, PV₂, PV₃, PV₄, and PV₅. Alternatively, the second image V₃ corresponding to the target phase T₃ may be reconstructed based on second scanning data (i.e., fusing first scanning data corresponding to the first phases T₁, T₂, T₃, T₄, and T₅) corresponding to the target phase T₃.

In some embodiments, for a specific first phase other than the target phase among the first phases, the processing device 110 or the second generation module 230 may acquire a first image corresponding to the specific first phase and first images corresponding to second phases associated with the specific first phase (also referred to as association phases). Subsequently, the processing device 110 or the second generation module 230 may generate the second image corresponding to the specific first phase by fusing the first image corresponding to the specific first phase and the first images corresponding to the second phases associated with the specific first phase.

The second phases associated with the specific first phase include a plurality of consecutive phases centered on the specific first phase. A count of these consecutive phases centered on the specific first phase is equal to or less than the count of first phases excluding the target phase.

For example, as shown in FIG. 4, T₁, T₂, T₃, T₄, and T₅ are first phases, where T₃ is the target phase. Then, the count of first phases excluding the target phase is four. By way of example, when T₂ is taken as the specific first phase, the second phases associated with T₂ may include T₁, T₃, and T₄ (three second phases in total). Further, the processing device 110 or the second generation module 230 may generate the second image corresponding to T₂ by fusing the first images corresponding to T₁, T₂, T₃, and T₄. As another example, when T₂ is taken as the specific first phase, the second phases associated with T₂ may include T₀, T₁, T₃, and T₄ (four in total). Further, the processing device 110 or the second generation module 230 may generate the second image corresponding to T₂ by fusing the first images corresponding to T₀, T₁, T₂, T₃, and T₄.

It should be noted that phase T₀ is not one of the first phases. Accordingly, the time interval corresponding to phase T₀ is not necessarily located within the target time interval. When T₀ is not within the target time interval including all the first phases, a time interval or a scanning range corresponding to T₀ may be derived recursively based on the first phases. For example, referring to FIG. 4, where T₁, T₂, T₃, T₄, and T₅ are first phases, and assuming scanning ranges corresponding to T₁, T₂, T₃, T₄, and T₅ are [360°, 480°], [420°, 540°], [480°, 600°], [540°, 660°], and [600°, 720°], respectively. It may be seen that the scanning range for each of the first phases is 120°, and a minimum value and a maximum value of the scanning range for each of the first phases increase sequentially by 60°. Based on this pattern, the scanning range for T₀ may also be 120°, thus a minimum value of the scanning range for T₀ may be 60° less than the minimum value of the scanning range for T₁, and a maximum value of the scanning range for T₀ may be 60° less than the maximum value of the scanning range for T₁. Thus, the scanning range corresponding to T₀ is [300°, 420°].

In some embodiments, the specific first phase is a central phase among the second phases associated with the specific first phase, i.e., the specific first phase is located at a center of the second phases. For example, as shown in FIG. 4, when T₂ is taken as the specific first phase, and the second phases associated with T₂ include T₀, T₁, T₃, and T₄, it is readily apparent that T₂ is the central phase among T₀, T₁, T₃, and T₄.

In some embodiments, the processing device 110 or the second generation module 230 generates the second image corresponding to the target phase based on the second scanning data corresponding to the specific first phase. For example, the processing device 110 or the second generation module 230 may generate the second image corresponding to the specific first phase by performing image reconstruction based on the second scanning data corresponding to the specific first phase. As described above, it may be understood that the second scanning data corresponding to the specific first phase may be generated by fusing the scanning data of the specific first phase and the scanning data of the second phases associated with the specific first phase.

By way of example, as shown in FIG. 4, when T₂ is taken as the specific first phase and the associated second phases include T₀, T₁, T₃, and T₄, the second scanning data corresponding to the specific first phase T₂ includes the first scanning data corresponding to T₂ and the second phases (i.e., T₀, T₁, T₃, and T₄) associated with the specific first phase. In other words, the second scanning data corresponding to the specific first phase T₂ is a collection of the first scanning data corresponding to the second phases T₀, T₁, T₂, T₃, and T₄.

In some embodiments of the present disclosure, the second image corresponding to each of the first phases is generated by fusing the first image of each of the first phases with the first images of the association phases of the first phase. This approach makes full use of the information from adjacent phases (i.e., consecutive phases) to compensate for the limitations of data from a single phase, thereby improving the completeness and accuracy of the second images. By summing or fusing the first image of the first phase with the first image of the association phases (i.e., the second phase), the scanning range of the second image can be expanded to cover a broader scanning region. The flexible selection of association phases allows the scanning range corresponding to the second image to be dynamically and flexibly adjusted, enabling the image correction system to optimize angular coverage based on specific requirements, thereby further enhancing image quality. In addition, expanding to association phases centered on the target phase provides enriched phase information and enhances the completeness and reliability of image reconstruction. Moreover, the flexible division (overlapping or non-overlapping) of the scanning range corresponding to the first phase is conducive to optimizing the accuracy of subsequent image registration and the effectiveness of multi-phase image fusion. For first phases located at temporal boundaries, incorporating data from adjacent subsequent or preceding phases (e.g., phases lie outside the preset time period) into the reconstruction of the second images prevents degradation in image quality due to insufficient data, thus ensuring consistency in the image reconstruction quality across the entire phase sequence.

In some embodiments, for a multi-source CT scanning, the second image corresponding to the target phase may be generated by fusing the sub-images corresponding to all the first phases.

In some embodiments, for a multi-source CT scanning, the second image corresponding to the target phase may be generated by fusing the scanning sub-datasets acquired by the multiple imaging components to obtain the second image.

The second phase corresponding to other first phases may be generated same as or similar to the second image corresponding to the target phase.

In 340, a motion estimation corresponding to each of the first phases may be determined based on the second images. In some embodiments, operation 340 may be performed by the processing device 110 or the registration module 240.

In some embodiments, the motion estimation corresponding to one of the first phases may be determined by registering the second image corresponding to the one of the first phases with a first reference image. For example, the motion estimation corresponding to each of the first phases may be determined by registering the second image corresponding to the each of the first phases with a first reference image.

The first reference image serves as a baseline for registering the second images. The processing device 110 or the registration module 240 may register each of the second images with the first reference image to obtain the motion estimation corresponding to each of the first phases associated with the second image.

The processing device 110 or the registration module 240 may select the first reference image in various ways.

In some embodiments, the processing device 110 or the registration module 240 may determine a second image (i.e., a target second image) corresponding to the target phase as the first reference image. If the first reference image is the second image corresponding to the target phase, the motion estimation corresponding to the target phase may be zero.

In some embodiments, the processing device 110 or the registration module 240 may determine, among all first phases, a second image corresponding to a first phase with a smallest motion amplitude of a subject as the first reference image. For example, when the subject is the heart, the first reference image may be the second image corresponding to the first phase during mid-diastole of the heart.

In some embodiments, the processing device 110 or the registration module 240 may determine any one of the second images as the first reference image.

In some embodiments, the processing device 110 or the registration module 240 may also determine the first reference image in other ways, which are not limited herein.

The motion estimation reflects a displacement of a portion of the subject represented by each pixel in the second image at a position represented by the each pixel in the second image relative to a position represented by a corresponding pixel in the first reference image. It should be noted that a position represented by a pixel in an image refers to a position of the portion of the subject in the subject. Two pixels in the second image and the first reference image represent the same portion of the subject. For brevity, the motion estimation reflects a displacement of each pixel in the second image relative to a corresponding pixel in the first reference image.

The motion estimation may be characterized based on a motion vector field (also referred to as a motion field). The motion vector field includes displacements of pixels in the second image in an x direction, a y direction, and a z direction at a time point (e.g., a mid-point of the first phase corresponding to the second image) relative to another time point (e.g., a mid-point of the first phase corresponding to the first reference image).

In some embodiments, the processing device 110 or the registration module 240 may perform multi-channel feature extraction on each of the second images to obtain a multi-channel feature map of the second image. In some embodiments, the processing device 110 or the registration module 240 may perform multi-channel feature extraction on the first reference image to obtain a multi-channel feature map of the first reference image. In some embodiments, for each of the second images, the processing device 110 or the registration module 240 registers the multi-channel feature map of the second image with the multi-channel feature map of the first reference image to obtain the motion vector field corresponding to the second image.

A multi-channel feature map refers to a map composed of feature points extracted from an image (e.g., a second image or the first reference image). In some embodiments, the processing device 110 or the registration module 240 may select an appropriate feature extraction technique based on specific application scenarios and requirements. For example, the processing device 110 or the registration module 240 may extract feature points from the image through a deep learning model (e.g., a Convolutional Neural Network, CNN). As another example, the processing device 110 or the registration module 240 may extract feature points from the image through traditional image processing techniques such as Scale-Invariant Feature Transform (SIFT), Speeded Up Robust Features (SURF), or the like.

In some embodiments, the processing device 110 or the registration module 240 may match feature points in the multi-channel feature map of each of the second images with feature points in the multi-channel feature map of the first reference image to identify a corresponding feature point pair. For each of the second images, the processing device 110 or the registration module 240 may estimate a geometric transformation relationship (e.g., affine transformation, perspective transformation, etc.) from a first phase corresponding to the second image to a phase (which may be one of the first phases) corresponding to the first reference image based on the matched feature point pair. The processing device 110 or the registration module 240 may then compute motion vectors based on the estimated geometric transformation relationship. The motion vectors together form a motion vector field (i.e., the motion vector field corresponding to the first phase of the second image) of the pixels from the first phase corresponding to the second image to the phase corresponding to the first reference image.

In some embodiments, the processing device 110 or the registration module 240 may determine the motion estimation corresponding to each of the first phases by registering each of the second images with the first reference image in other manners, such as using a Demons algorithm, an image domain registration technique, or the like.

In some embodiments of the present disclosure, multi-channel feature extraction can capture various types of information in an image, such as a color, a texture, a shape, etc., of the image, providing a more comprehensive and accurate representation compared to single-feature extraction. By extracting features through multiple channels simultaneously, dimensions and details of the feature map can be enhanced, offering richer information for subsequent analysis. After performing registration based on multi-channel feature maps, the obtained multiple motion vector field can accurately reflect displacements of different parts of the image between different phases.

In some embodiments, the processing device 110 or the registration module 240 may process the second images via a motion estimation determination model to determine the motion estimation of each of the first phases (or the second images, or the first images). The motion determination model may be a machine learning model (e.g., a Convolutional Neural Network (CNN) model or the like). An input of the motion determination model may include the second images and the first reference image, and an output of the motion determination model may include the motion estimation of the first phases corresponding to each of the second images.

In some embodiments, training sample data for the motion determination model includes a plurality of sample second images, a sample first reference image, and a sample motion estimation corresponding to each of sample first phases. The plurality of sample second images and the sample first reference image serve as training inputs to the deep learning model, and sample motion estimations corresponding to the sample first phases serve as training labels for the deep learning model. The plurality of sample second images and the sample first reference image may be obtained from historical scanning procedures, and the sample motion estimations may be motion estimations determined during the historical scanning procedures.

In 350, a target image corresponding to the target phase may be generated based on at least one of the motion estimations corresponding to the first phases and the first images. In some embodiments, operation 350 may be performed by the processing device 110 or the third generation module 250.

The target image refers to a final imaging result of the subject corresponding to the target phase. For example, if the subject is the heart, the target image may be a full-angle reconstructed image of the heart at the target phase.

In some embodiments, the processing device 110 or the third generation module 250 may determine a calibrated first image corresponding to each of the first phases by calibrating each of the first images corresponding to the each of the first phases using the motion estimation corresponding to the each of the first phases.

Referring to the foregoing, the motion estimation may be a motion vector field including multiple vectors corresponding to pixels. Each vector included in the motion vector field may correspond to a displacement of a pixel. Therefore, the calibration includes: for a first image corresponding to a first phase, performing inverse mapping (i.e., inverse displacement based on the corresponding vector in the motion vector field) for each pixel in the first image by using an inverse vector of the vector corresponding to the each pixel in the motion vector field. After performing inverse mapping for all pixels of the first image, a calibrated first image corresponding to the first phase is obtained for the first image.

In some embodiments, the processing device 110 or the third generation module 250 may fuse the calibrated first images corresponding to the first phases to obtain the target image corresponding to the target phase.

Referring to the foregoing, the fusion of the calibrated first images may include: for each of second pixels in the target image corresponding to the target phase, determining a pixel value of the second pixel by summing pixel values of first pixels corresponding to the second pixel in the calibrated first images corresponding to the first phases (including the target phase).

In some embodiments, the above summation is a weighted summation, where weights corresponding to the calibrated first images associated with different first phases are different. The weight of each of the calibrated first images is related to a relationship between each specific first phase and the target phase. For example, the relationship may be a relative positional relationship between the specific first phase and the target phase. The closer the specific first phase is to the target phase, the greater the weight of the calibrated first image corresponding to the specific first phase is. As another example, the relationship may be a similarity between a calibrated first image corresponding to the specific first phase and the calibrated first image corresponding to the target phase. The higher the similarity between a calibrated first image corresponding to the specific first phase and the calibrated first image corresponding to the target phase is, the greater the weight of the calibrated first image is.

In some embodiments, the processing device 110 or the third generation module 250 may calibrate the first image corresponding to the target phase using the motion estimation corresponding to the target phase to obtain the target image corresponding to the target phase.

Referring to the foregoing descriptions, the imaging device 150 includes a multi-source CT device, which comprises a plurality of imaging components, where each imaging component includes a radiation source and a detector.

Therefore, in some embodiments, the processing device 110 or the third generation module 250 may fuse a plurality of sub-images corresponding to one of the first phases to generate the first image corresponding to the one of the first phases.

Still taking the dual-source CT device as an example, for each of the first phases, the processing device 110 or the third generation module 250 may fuse the first sub-image and the second sub-image corresponding to the first phase to obtain a first image corresponding to the first phase. Further, the processing device 110 or the third generation module 250 may fuse a plurality of first images corresponding to the first phases to obtain the second image corresponding to the target phase.

In some embodiments, for a multi-source CT system, each of the first images includes a plurality of first sub-images each of which is reconstructed based on a portion of one of a plurality of scanning sub-datasets acquired by one of a plurality of imaging components during one of the first phases. The processing device 110 or the third generation module 250 may determine the plurality of calibrated first sub-images corresponding to each of the first phases by calibrating the plurality of sub-images corresponding to the first phase using the motion estimation corresponding to the first phase. The processing device 110 or the third generation module 250 may fuse the plurality of calibrated sub-images corresponding to the first phases to generate the target image corresponding to the target phase.

Each of the plurality of first sub-images may be reconstructed based on the scanning sub-datasets acquired by one of the plurality of imaging components during one of the first phases.
In some embodiments, for the multi-source CT system, the first sub-images corresponding to each of the first phases may be fused to generate a first image corresponding to the first phase. Then the first image may be calibrated as described based on the motion estimation and the calibrated first images may be fused to determine the target image.

Still taking the dual-source CT device as an example, for each of the first phases, the processing device 110 or the third generation module 250 may use the motion estimation corresponding to the first phase to calibrate the first sub-image and the second sub-image corresponding to the first phase, so as to obtain a calibrated first sub-image and a calibrated second sub-image.

Still taking the dual-source CT device as an example, for each of the first phases, the processing device 110 or the third generation module 250 may fuse the calibrated first sub-image and the calibrated second sub-image corresponding to the first phase to obtain a calibrated first image corresponding to that first phase. Further, the processing device 110 or the third generation module 250 may fuse a plurality of calibrated first images corresponding to the first phases to obtain the target image corresponding to the target phase.

In some embodiments of the present disclosure, by applying the above image correction method in a multi-source CT system, it is possible to fuse data from multiple sensors (e.g., detectors), thereby reducing the limitations of a single sensor, improving data accuracy and detail representation, and providing more comprehensive scene information compared to a single-source CT system. In addition, the method can also reduce processing complexity associated with single-sensor data and enhance overall processing efficiency.

In some embodiments, the processing device 110 or the third generation module 250 may perform a plurality of iterations to generate the target image corresponding to the target phase. Each of the iterations includes the following operations S1 to S2:
In S1, a calibrated second image corresponding to each of the first phases may be obtained based on the first images and the motion estimations.

The processing device 110 or the third generation module 250 may determine the calibrated second image corresponding to the target phase by the following operations (including S11 and S12):
In S11, a motion calibration may be performed on each of the first images using the motion estimation corresponding to the first phase to obtain a calibrated first image.

In S12, calibrated first images corresponding to the first phases may be fused to obtain the calibrated second image corresponding to the target phase.

For a specific first phase excluding the target phase, the processing device 110 or the third generation module 250 may determine a calibrated second image corresponding to the specific first phase according to the following operations S13-S17:
In S13, first images corresponding to second phases associated with the specific first phase and a first image corresponding to the specific first phase may be obtained. The second phases associated with the specific first phase include a plurality of consecutive phases centered on the specific first phase. More descriptions regarding the specific first phase and second phases can be found elsewhere in the present disclosure.

In S14, second images corresponding to the second phases and a second image corresponding to the specific first phase may be obtained. More descriptions regarding the second images may be found in elsewhere in the present disclosure.

In S15, a motion estimation corresponding to each of the second phases may be generated by registering the second image corresponding to each of the second phases with a second reference image. The second reference image is a baseline for registering the second images. The processing device 110 or the third generation module 250 may register each of the second images with the second reference image to obtain the motion estimation corresponding to the second phase. The second reference image may be the same as or different from the first reference image. For example, both the first reference image and the second reference image may be the second image corresponding to the target phase. As another example, the first reference image may be the second image corresponding to the target phase, and the second reference image may be a second image corresponding to the specific first phase. Referring to FIG. 4, if the target phase is T₃ and the specific first phase is T₂, the first reference image may be the second image V₃ corresponding to the target phase T₃, and the second reference image may be the specific second image V₂ corresponding to the specific first phase T₂. More descriptions regarding the first reference image can be found in FIG. 3 and the related descriptions thereof.

In S16, each of the first images corresponding to the second phases associated with the specific first phase and the specific first phase may be calibrated using the motion estimation determined in S15, so as to obtain calibrated first images corresponding to the second phases associated with the specific first phase and the specific first phase. The manner for calibrating the first images corresponding to the second phases associated with the specific first phase and the specific first phase may refer to the calibration approach described in FIG. 3.

In S17, the calibrated second image corresponding to the specific first phase may be generated by fusing the calibrated first images corresponding to the second phases associated with the specific first phase and the specific first phase. The manner for fusing the calibrated first images may refer to the fusion approach described in FIG. 3.

In S2, after obtaining the calibrated second image corresponding to each of the first phases through S1, whether a termination condition is satisfied may be determined. The termination condition refers to a condition for ending the iteration. For example, the termination condition may be that the count of iterations is greater than or equal to a predetermined iteration threshold. In response to the termination condition not being satisfied, operation S21 may be performed; in response to the termination condition being satisfied, operation S22 may be performed.

In S21, the calibrated second image corresponding to each of the first phases may be registered with the first reference image to obtain an updated motion estimation corresponding to each of the first phases, and the updated motion estimation may be designate as the motion estimation used in a next iteration, and proceed to the next iteration.

In some embodiments, in response to the termination condition being not satisfied, the calibrated first images corresponding to the first phases may be designated as the first images to be used in the next iteration.

In S22, in response to the termination condition being satisfied, the calibrated second image corresponding to the target phase may be designated as the target image corresponding to the target phase.

In some embodiments of the present disclosure, determining the target image through an iterative approach achieves at least the following beneficial effects:
Gradual improvement in image accuracy: Through a plurality of iterations, the first image of each phase is progressively calibrated, allowing for more accurate compensation of motion deviation. At each iteration, the motion vector field is re-estimated based on the calibrated second image, thereby gradually improving calibration accuracy and ultimately generating a high-quality target image.

Dynamic adjustment of the calibration strategy: During the iterative process, the update of the motion vector field enables the system to dynamically adapt to complex motion patterns in the image sequence, further enhancing the robustness of image reconstruction.

Flexibility of the termination condition: By setting an termination condition, the system can dynamically adjust the count of iterations according to actual requirements and data characteristics, thereby ensuring reconstruction accuracy and avoiding unnecessary computational resource consumption.

Efficient resource utilization: The iterative approach can progressively optimize image quality under limited computational resources. Compared to a single-pass calibration approach, the iterative approach provided in the present disclosure can more effectively utilize the initial data and improve the quality of the final target image.

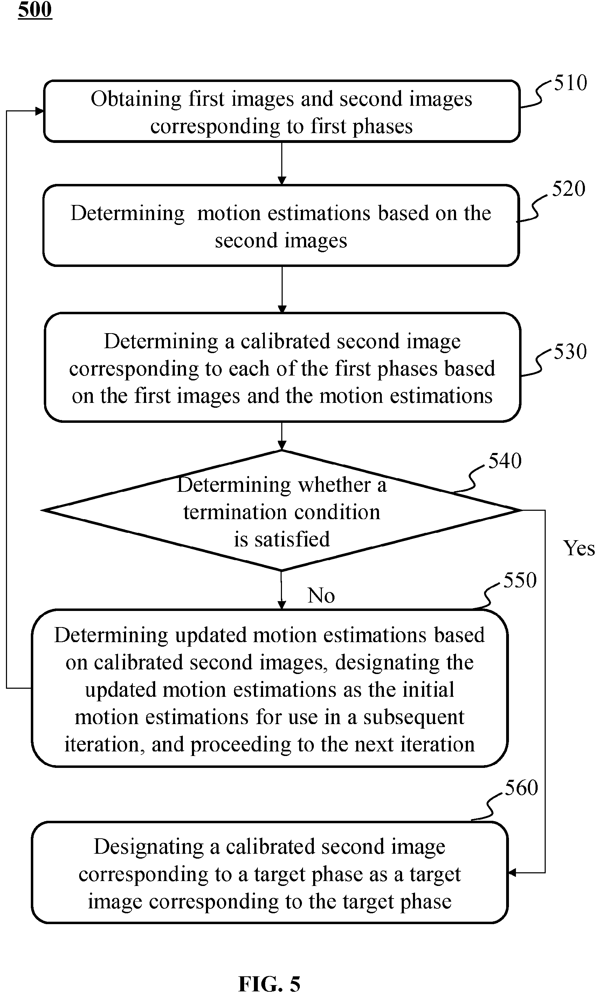

More descriptions regarding the iterative process may be found in FIG. 5 and the associated description.

In some embodiments of the present disclosure, by generating the first images and the second images having larger scanning ranges than the first images, obtaining the motion estimations based on the second images, and calibrating the first images based on the motion estimations to obtain the target image, the motion estimations determined based on the second images may improve the accuracy of the motion estimations as the second images with the larger scanning range are generated based on sufficient scanning data, thereby improving the accuracy of the motion calibration. By calibrating the first images with smaller scanning ranges may further improve the accuracy of the motion calibration as the first images generated based on insufficient scanning data may include less motion artifacts as the smaller scanning ranges. Further, fusing the first images to obtain the target image may obtain an image with a larger scanning range and less motion artifacts. The accuracy of the calibration result can be improved, thereby effectively reducing artifacts in the target image and enhancing the quality of the obtained image.

In some embodiments, the target image obtained through the above method may be used as a training label for a deep learning model. The trained deep learning model may then be used to determine target images for other scanning procedures (e.g., scans of other subsequent scan subjects). The deep learning model is a machine learning model, such as a convolutional neural network (CNN), or the like.

In some embodiments, training data for the deep learning model includes scanning data and the target image, where the scanning data serves as a training input and the target image serves as a training label.

In some embodiments, the training data for the deep learning model includes second images reconstructed from scanning data and a target image. The second images are used as training inputs, and the target image is used as the training label.

In some embodiments, the training data for the deep learning model includes first images corresponding to first phases reconstructed from scanning data and a target image. The first images corresponding to the first phases are used as training inputs, and the target image is used as the training label.

It should be noted that the above description of process 300 is provided merely for purposes of illustration and explanation, and does not limit the scope of the present disclosure. Various modifications and alterations to process 300 may be made by those skilled in the art in light of the teachings of the present disclosure. However, such modifications and alterations still fall within the scope of the present disclosure.

FIG. 5 is an exemplary flowchart illustrating a process for determining a target image through iterations according to some embodiments of the present disclosure.

In some embodiments, the processing device 110 or the third generation module 250 may perform a plurality of iterations to generate the target image corresponding to a target phase. As shown in FIG. 5, process 500 (a multi-round iteration process) includes the following operations. In some embodiments, process 500 may be executed by the processing device 110 or the third generation module 250.

In 510, first images and second images corresponding to first phases may be obtained.

In a first iteration, the first images may be the first images obtained based on the previously described operations, for example, the first images generated in operation 320. The second images may be the second images obtained based on the previously described operations, for example, the second images generated in operation 330.

In a second and subsequent iterations, the first images used in a current iteration may be the same first images as in the first iteration, or may be calibrated first images obtained by calibrating the first images from a previous iteration using motion estimations obtained from the previous iteration. The second image corresponding to each first phase used in a current iteration may be generated by fusing the calibrated first images of the first phase and the association phases of the first phase from a previous iteration.

In 520, motion estimations may be determined based on the second images. For example, the processing device 110 or the third generation module 250 may register each of the second images with a first reference image to determine a motion estimation corresponding to the first phase, thereby determining the motion estimations. More descriptions regarding the manner of registration may be found in FIG. 3 and the related descriptions thereof (e.g., descriptions relating to operation 340).

In 530, a calibrated second image corresponding to each of the first phases is determined based on the first images and the motion estimations. More descriptions regarding the determination of the calibrated second images corresponding to the first phases may be found with reference to FIG. 3 and the related descriptions, e.g., operation 350. For example, for a target phase among the first phases, the calibrated second image may be determined by calibrating each of the first images based on the motion estimation corresponding to the first image and fusing the calibrated first images. For a specific first phase excluding the target phase among the first phases, the calibrated second image may be determined by calibrating the first images of the specific first phases and the second phases associated with the specific first phase and fusing the calibrated first images.

In 540, whether a termination condition is satisfied may be determined. In response to the termination condition being not satisfied, the process proceeds to operation 550; in response to the termination condition being satisfied, the process proceeds to operation 560.

In 550, updated motion estimations may be determined based on the calibrated second images, and the updated motion estimations are designated as the initial motion estimations for use in a subsequent iteration, and the process proceeds to the next iteration. For example, processing device 110 or third generation module 250 may register each of the calibrated second images with the first reference image to obtain an updated motion estimation corresponding to the each of the first phases. Based on the first images. A manner for determining the calibrated second images based on the first images and the motion estimations may be found with reference to FIG. 3 and the related description, e.g., operation 350.

In 560, a calibrated second image corresponding to the target phase may be designated as the target image corresponding to the target phase.

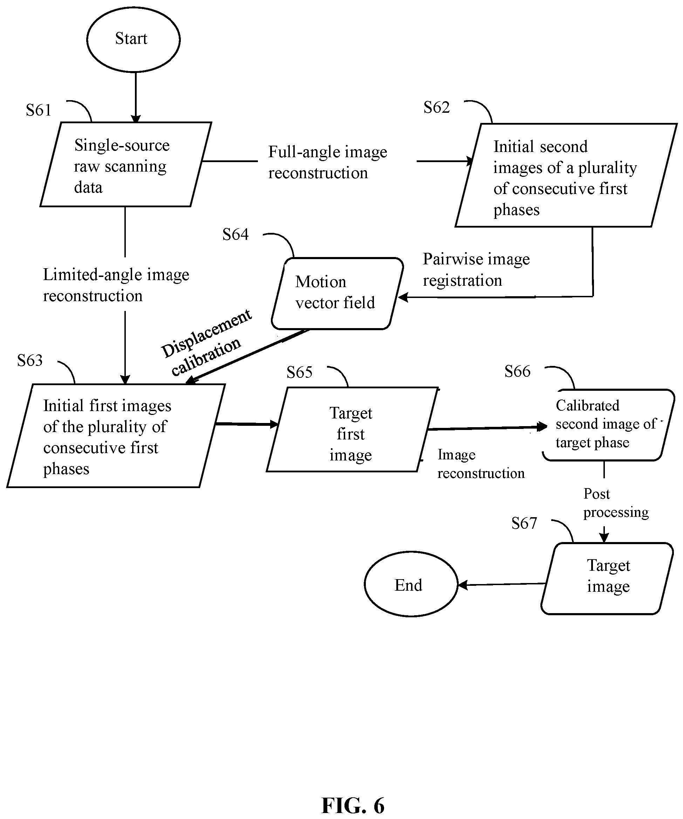

FIG. 6 is a schematic flowchart illustrating an image calibration process of a single-source CT system according to some embodiments of the present disclosure.

By way of example, assuming that the imaging device 150 is a single-source CT device. Referring to FIG. 6, the process of obtaining a target image includes the following operations S61 to S67:
In S61, single-source raw scanning data (i.e., initial scanning data acquired by the single-source CT device) may be obtained.
In S62, full-angle image reconstruction may be performed based on the single-source raw scanning data to obtain a second image (e.g., an initial full-angle image) corresponding to each of a plurality of consecutive first phases;
In S63, partial-angle image reconstruction may be performed based on the single-source raw scanning data to obtain a first image (e.g., an initial partial-angle image) corresponding to each of the plurality of consecutive first phases;

It should be noted that the manner for obtaining the second image corresponding to each of the plurality of consecutive first phases and the first image corresponding to each of the plurality of consecutive first phases based the raw scanning data (i.e., initial scanning data) may refer to the descriptions provided above (e.g., descriptions relating to FIG. 3).
In S64, image registration may be performed between the second images to obtain one or more motion vector fields (i.e., motion estimations) corresponding to each of the first phases;
In S65, for each of the plurality of consecutive first phases, a displacement calibration may be performed on the first image of each of the first phases based on the one or more motion vector fields corresponding to the first time point, to obtain a target first image (i.e., a calibrated first image);

In S66, an image calibration may be performed on the second image corresponding to a target phase based on target first image(s) corresponding to one or more of the plurality of consecutive first phases, to obtain a calibrated second image of the target phase. The image calibration may be performed by fusing the target first images corresponding to one or more of the plurality of consecutive first phases

The target phase is any one of the plurality of consecutive first phases. The first image(s) corresponding to one or more of the plurality of consecutive first phases are used to construct the second image of the target phase.

It should be noted that operation S66 is performed based on the first phases corresponding to the first images that are needed for constructing the second image of the target phase. Specific implementation details may be found in the embodiments previously described regarding the construction relationship between the second image of the target phase and the first images of the plurality of consecutive first phases.

In S67, post-processing may be performed on the calibrated second image of the target phase to obtain a final image (i.e., the target image);
By way of example, the post-processing may include dynamic range adjustment, color correction, noise reduction, or the like to improve the quality of the final image.

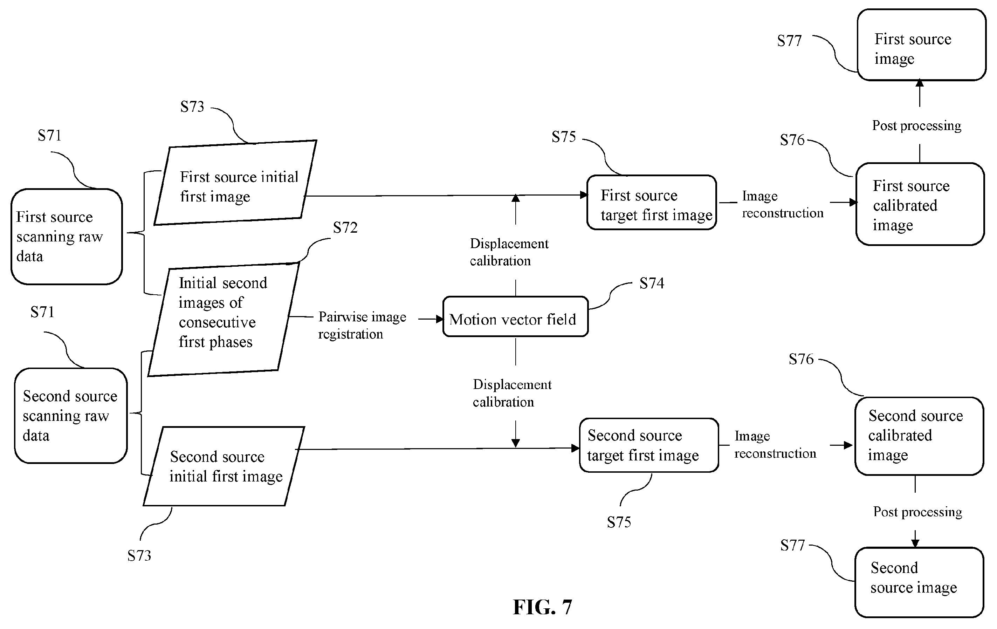

FIG. 7 is a schematic flowchart illustrating an image calibration process of a dual-source CT system according to some embodiments of the present disclosure.

As another example, assuming that the imaging device 150 is a dual-source CT device, where the two radiation sources are referred to as a first radiation source and a second radiation source. Referring to FIG. 5, a target image may be obtained through operations including S71 to S77:
In S71, raw scanning data (i.e., a first scanning sub-dataset acquired by the first radiation source) of the first radiation source and raw scanning data (i.e., a second scanning sub-dataset acquired by the second radiation source) of the second radiation source during a preset time period may be obtained.

In S72, full-angle image reconstruction may be performed using the raw scanning data of the first radiation source and the raw scanning data of the second radiation source to obtain a second image (e.g., an initial full-angle image) of each of a plurality of consecutive first phases; For example, the second image corresponding to a target phase may be reconstructed based on fusion of the raw scanning data of the first radiation source and the raw scanning data of the second radiation source. As another example, the second image corresponding to a target phase may be generated by fusing an image reconstructed based on the raw scanning data of the first radiation source and an image reconstructed based on the raw scanning data of the second radiation source. More descriptions for the reconstruction of the second image corresponding to each of the first phases may be found elsewhere in the present disclosure. See, operation 330 in FIG. 3. For example, the second image corresponding to the target phase may be generated by fusing the first images corresponding to the first radiation source and the first images of the first phases corresponding to the second radiation source. In S73, partial-angle image reconstruction may be performed using the raw scanning data of the first radiation source and the raw scanning data of the second radiation source respectively to obtain a first image (e.g., an initial partial-angle image, referred to as a first radiation source first image) corresponding to each of the plurality of consecutive first phases for the first radiation source, and a first image (referred to as a second radiation source first image) of each of the plurality of consecutive first phases for the second radiation source;

It should be noted that the manner of obtaining the second images corresponding to the plurality of consecutive first phases and the first image corresponding to each of the plurality of consecutive first phases for each radiation source using dual-source raw scanning data (i.e., the raw scanning data of the first radiation source and the raw scanning data of the second radiation source) may refer to the descriptions provided above and will not be repeated here.

In S74, image registration may be performed between the second images to obtain one or more motion vector fields corresponding to each of the first phases.

In S75, for each of the first phases of the first radiation source or the second radiation source), a displacement calibration may be performed on the first image of the each of the first phases based on the one or more motion vector fields associated with the first phase, to obtain a target first image (i.e., a calibrated first image). The target first image for each of the first phases of the first radiation source and the target first image for each of the first phases of the second radiation source are also referred to as a first radiation source target first image and a second radiation source target first image, respectively.

In S76, image recombination (i.e., image calibration) may be performed on the first radiation source target first images and the second radiation source target first images corresponding to the first phases, respectively, to obtain a calibrated second image of the target phase corresponding to the first radiation source and a calibrated second image of the target phase corresponding to the second radiation source, referred to as a first radiation source calibrated image and a second radiation source calibrated image, respectively.

It should be noted that operation S76 is performed based on the first phases corresponding to the first images that are required for constructing the second image of the target phase among the plurality of consecutive first phases. The specific implementation may refer to the aforementioned embodiments regarding the construction relationship between the second image of the target phase and the first images of the plurality of consecutive first phases.

In S77, post-processing may be performed on the first radiation source calibrated image and the second radiation source calibrated image, respectively, to obtain a final image corresponding to the first radiation source and a final image corresponding to the second radiation source, referred to as a first radiation source image and a second radiation source image, respectively.

It may be understood that FIG. 6 and FIG. 7 only provide simplified descriptions of the above operations. For detailed explanations, please refer to the accompanying text descriptions corresponding to FIG. 6 and FIG. 7. In addition, for multi-source CT systems including three or more radiation sources, reference may be made to the related embodiments of the dual-source case described above.

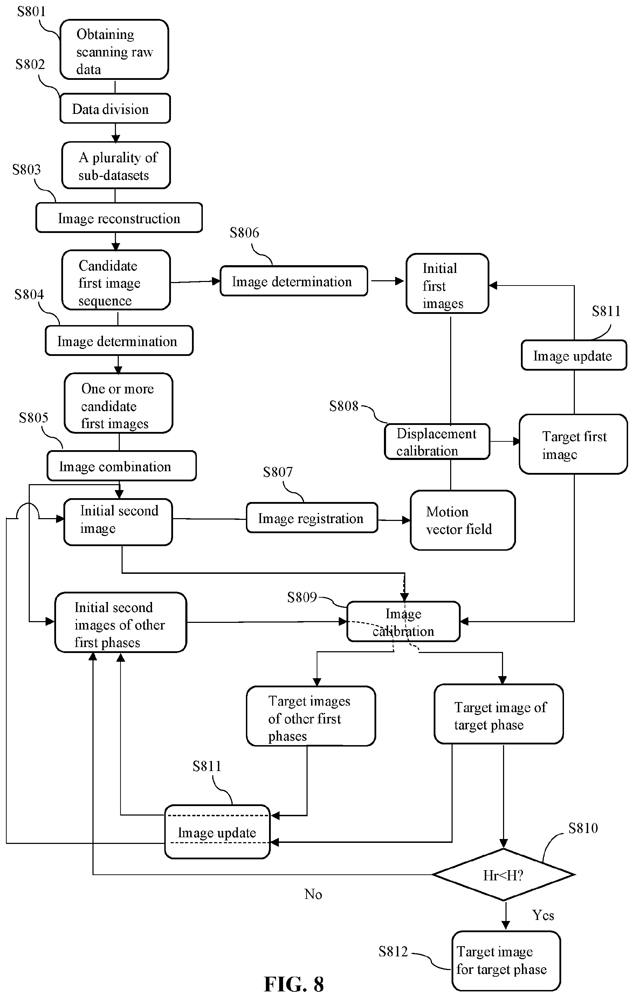

FIG. 8 is a schematic diagram illustrating an iterative image correction process according to some embodiments of the present disclosure.

Referring to FIG. 8, a single-source CT device is taken as an example to illustrate an exemplary iterative correction process of the embodiments of the present disclosure. The process includes one or more of the following operations:

In S801, raw scanning data (i.e., initial scanning data) may be obtained. Proceed to S802.

In S802, the raw scanning data may be divided according to a preset phase sequence to obtain a plurality of sub-datasets. Proceed to S803.

The preset phase sequence includes a plurality of consecutive first phases, and each of the sub-datasets correspond one of the first phases in the preset phase sequence.

In S803, image reconstruction may be performed on each of the sub-datasets to obtain a candidate first image sequence corresponding to the preset phase sequence. Proceed to S804.

The candidate first image sequence includes candidate first images, wherein each of the candidate first images corresponds to one of the first phases in the preset phase sequence.

In S804, based on a phase requirement of second images in the consecutive first phases, a plurality of candidate first images corresponding to each of the second images may be determined from the candidate first image sequence. Proceed to S805.

In S805, for each of the second images, the plurality of candidate first images corresponding to the second image may be combined to construct the second image. Proceed to S806.

In S806, the candidate first images corresponding to the consecutive first phases may be determined as first images. Proceed to S807.

In S807, in a current iteration, pairwise image registration may be performed on the second images to obtain one or more motion vector fields corresponding to each of the first phases. Proceed to S808.

In S808, for each of the first phases in the consecutive first phases, displacement correction may be performed on the first image corresponding to the first phase based on the one or more motion vector fields corresponding to the first phase to obtain a target first image. Proceed to S809.

In S809, image correction may be performed on the second image corresponding to a target phase based on target first image(s) corresponding to one or more of the consecutive first phases, to obtain a target second image of the target phase. Proceed to S810.

In S810, whether a current iteration count Hr is less than a preset count H. If the current iteration count Hr is less than the preset count H, first phases other than the target phase among the consecutive first phases may be designated as target phases, and operations S808 to S809 may be repeated to obtain a target second image of each of the first phases other than the target phase among the consecutive first phases, and proceed to S811; otherwise, proceed to S812.

In S811, for each of the first phases, the target second image may be updated to the second image corresponding to the first phase, and the target first image corresponding to the first phase may be updated to the first image corresponding to the first phase, then return to S807.

In S812, the target second image of the target phase may be determined as the corrected image (i.e., the target image) for the target phase.

It should be understood that FIG. 8 merely provides a simplified depiction of the above operations; for details, please refer to the textual description corresponding to FIG. 8.

It should be understood that the numerical order of the above operations does not necessarily indicate the execution sequence. The order in which the operations are performed may be determined based on their functions and internal logic, and should not be construed as limiting the implementation of the embodiments described herein.

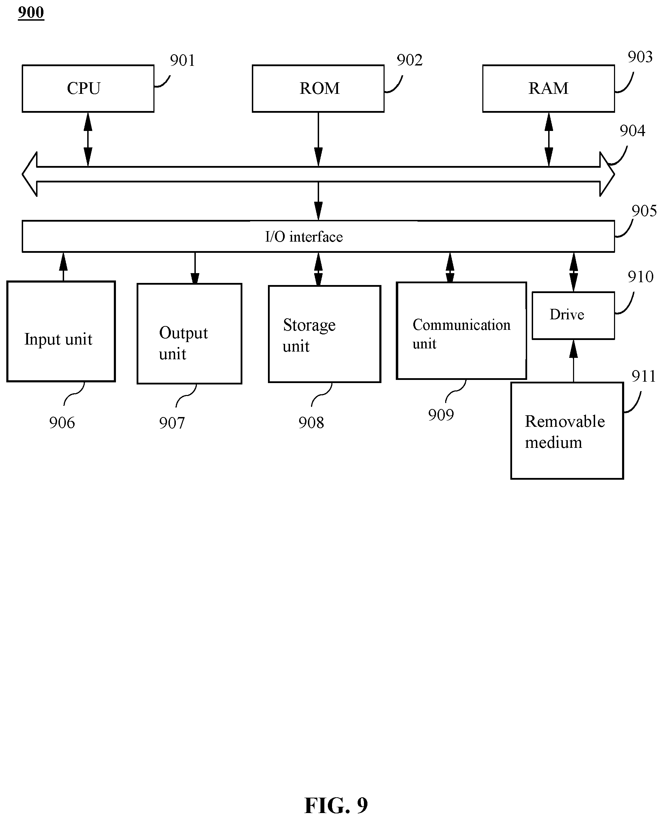

FIG. 9 is a structural schematic diagram of a computer device according to some embodiments of the present disclosure.

Referring to FIG. 9, FIG. 9 illustrates a schematic structural diagram of a computer system suitable for implementing the embodiments of the present disclosure. As shown in FIG. 9, a computer device 900 includes a central processing unit (CPU) 901, which may perform various appropriate operations and processing based on programs stored in a read-only memory (ROM) 902 or programs loaded into a random access memory (RAM) 903 from a storage unit 908. The RAM 903 also stores various programs and data required for operating the system. The CPU 901, the ROM 902, and the RAM 903 are interconnected via a bus 904. An input/output (I/O) interface 905 is also connected to the bus 904.

The following components are connected to the I/O interface 905: an input unit 906 including a keyboard, a mouse, or the like; an output unit 907 including a cathode ray tube (CRT), a liquid crystal display (LCD), a speaker, or the like; a storage unit 908 including a hard disk, or the like; and a communication unit 909 including network interface cards such as a LAN card, a modem, or the like. The communication unit 909 performs communication processing via a network such as the Internet. A drive 910 may be connected to the I/O interface 905 according to requirements. A removable medium 911, such as a magnetic disk, an optical disk, a magneto-optical disk, semiconductor memory, or the like may be mounted on the drive 910 according to requirements, allowing a computer program to be read therefrom and installed into the storage unit 908 when necessary.

According to the embodiments of the present disclosure, the process described above with reference to the flowchart in FIG. 3 may be implemented as a computer software program. For example, the embodiments of the present disclosure include a computer program product comprising a computer program carried on a computer-readable medium, the computer program comprising program code for performing the method illustrated in the flowchart. In such an embodiment, the computer program may be downloaded and installed via the communication unit 909 from a network, and/or installed from the removable medium 911. When executed by the central processing unit (CPU) 901, the computer program performs the above-described functions defined in the system for image correction of the present disclosure.

It should be noted that the computer-readable medium described in the present disclosure may be a computer-readable signal medium, a computer-readable storage medium, or any combination thereof. The computer-readable storage medium may be-without limitation-a system, an apparatus, or a device implemented using electrical, magnetic, optical, electromagnetic, infrared, or semiconductor technology, or any combination of the above. More specific examples of computer-readable storage media may include: an electrical connection having one or more wires, a portable computer diskette, a hard disk, random access memory (RAM), read-only memory (ROM), erasable programmable read-only memory (EPROM or Flash memory), an optical fiber, portable compact disc read-only memory (CD-ROM), an optical storage devices, a magnetic storage device, or any suitable combination of the above. In the present disclosure, the computer-readable storage medium may be any tangible medium that contains or stores a program, which may be used by or in conjunction with an instruction execution system, an apparatus, or a device. Meanwhile, in the present disclosure, the computer-readable signal medium may include a data signal propagated in baseband or as part of a carrier wave, which carries computer-readable program code. Such a propagated data signal may take various forms, including an electromagnetic signal, an optical signal, or any suitable combination thereof. The computer-readable signal medium may also be any computer-readable medium other than a computer-readable storage medium that can transmit, propagate, or carry a program for use by or in connection with an instruction execution system, an apparatus, or a device. The program code contained on the computer-readable medium may be transmitted using any appropriate medium, including but not limited to: wireless, wireline, optical cable, RF, or any suitable combination of the above.

The basic concepts are described above. Obviously, for those skilled in the art, the above detailed disclosure is only an example, and does not constitute a limitation to the present disclosure. Although not expressly stated here, those skilled in the art may make various modifications, improvements, and corrections to the present disclosure. Such modifications, improvements and corrections are suggested in present disclosure, so such modifications, improvements, and corrections still belong to the spirit and scope of the exemplary embodiments of the present disclosure.

Meanwhile, the present disclosure uses specific words to describe the embodiments of the present disclosure. For example, "one embodiment," "an embodiment," and/or "some embodiments" refer to a certain feature, structure or characteristic related to at least one embodiment of the present disclosure. Therefore, it should be emphasized and noted that references to "one embodiment" or "an embodiment" or "an alternative embodiment" two or more times in different places in the present disclosure do not necessarily refer to the same embodiment. In addition, certain features, structures or characteristics in one or more embodiments of the present disclosure may be properly combined.

In addition, unless clearly stated in the claims, the sequence of processing elements and sequences described in the present disclosure, the use of counts and letters, or the use of other names are not used to limit the sequence of processes and methods in the present disclosure. While the foregoing disclosure has discussed by way of various examples some embodiments of the invention that are presently believed to be useful, it should be understood that such detail is for illustrative purposes only and that the appended claims are not limited to the disclosed embodiments, but rather, the claims are intended to cover all modifications and equivalent combinations that fall within the spirit and scope of the embodiments of the present disclosure. For example, although the implementation of various components described above may be embodied in a hardware device, it may also be implemented as a software only solution, e.g., an installation on an existing server or mobile device.

In the same way, it should be noted that in order to simplify the expression disclosed in this disclosure and help the understanding of one or more embodiments of the invention, in the foregoing description of the embodiments of the present disclosure, sometimes multiple features are combined into one embodiment, drawings or descriptions thereof. This manner of disclosure does not, however, imply that the subject matters of the disclosure requires more features than are recited in the claims. Rather, claimed subject matters may lie in less than all features of a single foregoing disclosed embodiment.

In some embodiments, numbers describing the quantity of components and attributes are used. It should be understood that such counts used in the description of the embodiments use the modifiers "about," "approximately," or "substantially" in some examples. Unless otherwise stated, "about", "approximately" or "substantially" indicates that the stated figure allows for a variation of ±20%. Accordingly, in some embodiments, the numerical parameters used in the disclosure and claims are approximations that may vary depending upon the desired characteristics of individual embodiments. In some embodiments, numerical parameters should consider the specified significant digits and adopt the general digit retention method. Although the numerical ranges and parameters used in some embodiments of the present disclosure to confirm the breadth of the range are approximations, in specific embodiments, such numerical values are set as precisely as practicable.

Each of the patents, patent applications, publications of patent applications, and other material, such as articles, books, specifications, publications, documents, things, and/or the like, referenced herein is hereby incorporated herein by this reference in its entirety for all purposes, excepting any prosecution file history associated with same, any of same that is inconsistent with or in conflict with the present document, or any of same that may have a limiting affect as to the broadest scope of the claims now or later associated with the present document. By way of example, should there be any inconsistency or conflict between the description, definition, and/or the use of a term associated with any of the incorporated material and that associated with the present document, the description, definition, and/or the use of the term in the present document shall prevail.

In closing, it is to be understood that the embodiments of the present disclosure disclosed herein are illustrative of the principles of the embodiments of the present disclosure. Other modifications that may be employed may be within the scope of the present disclosure. Thus, by way of example, but not of limitation, alternative configurations of the embodiments of the present disclosure may be utilized in accordance with the teachings herein. Accordingly, embodiments of the present disclosure are not limited to that precisely as shown and described.

## Claims

1. A method for image correction, comprising:
obtaining initial scanning data in a preset time period;
for each of first phases in the preset time period, generating a first image based on the initial scanning data and a second image based on the initial scanning data or first images corresponding to the first phases, a scanning range of the first image corresponding to a first phase being different from a scanning range of the second image corresponding to the same first phase;
determining a motion estimation corresponding to each of the first phases based on second images corresponding to the first phases; and
generating a target image for a target phase among the first phases based on the first images and motion estimations corresponding to the first phases.

2. The method of claim **1,** wherein different scanning ranges of the first image and the second image corresponding to the same first phase are denoted by scanning angles, and a scanning angle of the first image is less than a scanning angle of the second image, preferably, scanning angles of the first images are partial-angles, and scanning angles of the second images are full-angles.

3. The method of any one of claims 1 or claims 2, wherein the first image corresponding to one of the first phases is generated based on a portion of the initial scanning data acquired in the one of the first phases and generating the first image includes:
dividing the initial scanning data in the preset time period into a plurality of segments according to the first phases, each of the plurality of segments being acquired during one of the first phases; and
reconstructing each of the first images corresponding to one of the first phases based on one of the plurality of segments corresponding to the one of the first phases.

4. The method of any one of claims 1 to 3, wherein generating the second image includes:
generating the second image corresponding to the target phase by fusing the first images corresponding to the first phases.

5. The method of any one of claims 1 to 4, wherein generating the second image includes:
for a specific first phase among the first phases except the target phase,
determining a second image corresponding to the specific first phase according to operations including:
obtaining a first image corresponding to the specific first phase and first images corresponding to second phases associated with the specific first phase, the second phases associated with the specific first phase including a plurality of consecutive phases centered on the specific first phase;
generating a second image corresponding to the specific first phase by fusing the first images corresponding to the second phases and the first image corresponding to the specific first phase.

6. The method of any one of claims 1 to 5, wherein the generating a target image for a target phase includes:
determining a calibrated first image corresponding to each of the first phases by calibrating each of the first images corresponding to the each of the first phases using the motion estimation corresponding to the each of the first phases; and
fusing the calibrated first images corresponding to the first phases to obtain the target image corresponding to the target phase.

7. The method of any one of claims 1 to 5, wherein the determining a target image for a target phase includes:
calibrating the first image or the second image corresponding to the target phase using the motion estimation corresponding to the target phase to obtain the target image corresponding to the target phase.

8. The method of any one of claims 1 to 7, wherein
the initial scanning data includes a plurality of scanning sub-datasets, each of the plurality of scanning sub-datasets is acquired by one of a plurality of imaging components of a multi-source computed tomography (CT) device, each of the first images corresponding to each of the first phases is generated according to operations including:
generating a first sub-image based on a portion of each of the plurality of scanning sub-datasets acquired during the each of the first phases to obtain multiple first sub-images; and
fusing the multiple first sub-images to obtain the first image corresponding to the each of the first phases.

9. The method of any one of claims 1 to 7, wherein each of the first images includes multiple first sub-images each of which is reconstructed based on a portion of one of a plurality of scanning sub-datasets acquired by one of a plurality of imaging components during one of the first phases,
the generating a target image corresponding to the target phase includes:
determining a plurality of calibrated first sub-images corresponding to the each of the first phases by calibrating the multiple first sub-images corresponding to the first phase using the motion estimation corresponding to the first phase; and
fusing the calibrated first sub-images corresponding to the first phases to generate the target image corresponding to the target phase.

10. The method of any one of claims 1-5, wherein the determining a target image for a target phase includes:
performing a plurality of iterations, wherein each of the plurality of iterations includes:
obtaining a calibrated second image corresponding to each of the first phases based on the first images and the motion estimations corresponding to the first phases;
in response to determining that a termination condition is not satisfied,
determining an updated motion estimation corresponding to each of the first phases based on the calibrated second image;
designating the updated motion estimation as the motion estimation used in a next iteration and proceeding to the next iteration; and
in response to determining that the termination condition is satisfied,
designating a calibrated second image corresponding to the target phase as the target image corresponding to the target phase.

11. The method of claim 10, wherein the obtaining a calibrated second image corresponding to each of the first phases based on the first images and the motion estimation includes:
determining the calibrated second image corresponding to the target phase by:
performing a motion calibration on each of the first images using the motion estimation corresponding to the each of the first phases to obtain a calibrated first image; and
fusing the calibrated first images corresponding to the first phases to obtain the calibrated second image corresponding to the target phase.

12. The method of claim 11 further comprising:
in response to determining that the termination condition is not satisfied, designating the calibrated first images corresponding to the first phases as the first images used in the next iteration.

13. The method of any one of claims 10 to 12, wherein the obtaining a calibrated second image corresponding to each of the first phases based on the first images and the motion estimations corresponding to the first phases includes:
determining the calibrated second image corresponding to a specific first phase among the first phases except the target phase by:
obtaining first images corresponding to second phases associated with the specific first phase and a first image corresponding to the specific first phase, the second phases associated with the specific first phase including a plurality of consecutive phases centered on the specific first phase;
obtaining second images corresponding to the second phases and a second image corresponding to the specific first phase;
generating a motion estimation corresponding to each of the second phases and the specific first phase by registering the second images corresponding to one of the second phases and the specific first phase to a second reference image;
calibrating each of the first images corresponding to one of the second phases and the specific first phase using the motion estimation to obtain calibrated first images corresponding to the second phases associated with the specific first phase and the specific first phase; and
generating the calibrated second image corresponding to the specific first phase by fusing the calibrated first images, wherein
the second phases associated with the specific first phase include one or more consecutive phases of the specific first phase among the first phases.

14. A system for image correction comprising:
an acquisition module, configured to obtain initial scanning data in a preset time period;
a first generation module, configured to generate a first image for each of first phases in the preset time period based on the initial scanning data;
a second generation module, configured to generate a second image for each of first phases in the preset time period based on the initial scanning data or first images corresponding to the first phases, a scanning range of the first image corresponding to a first phase being different from a scanning range of the second image corresponding to the same first phase;
a registration module, configured to determine a motion estimation corresponding to each of the first phases based on second images corresponding to the first phases; and
a third generation module, configured to generate a target image for a target phase among the first phases based on the first images and motion estimations corresponding to the first phases.

15. A non-transitory computer-readable storage medium storing computer instructions, wherein when reading the computer instructions in the storage medium, a computer implements the method for image correction of any of claims 1-13.
